# EUROPEAN PATENT SPECIFICATION

(11) **EP 2 988 351 B1**
(45) Date of publication and mention of the grant of the patent: **20.11.2019**
(21) Application number: 14785348.5
(22) Date of filing: 14.04.2014
(51) Int. Cl.: H01M 4/13, H01B 1/24, H01G 11/66, H01M 4/24, H01M 4/66

(54) **CONDUCTIVE COMPOSITION, CONDUCTIVE COMPOSITION FOR FORMING BASE LAYER, COLLECTOR WITH BASE LAYER FOR USE IN POWER STORAGE DEVICE, ELECTRODE FOR USE IN POWER STORAGE DEVICE, AND POWER STORAGE DEVICE**
LEITFÄHIGE ZUSAMMENSETZUNG, LEITFÄHIGE ZUSAMMENSETZUNG ZUR HERSTELLUNG EINER BASISSCHICHT, KOLLEKTOR MIT BASISSCHICHT ZUR VERWENDUNG BEI DER ENERGIESPEICHERVORRICHTUNG, ELEKTRODE ZUR VERWENDUNG IN DER ENERGIESPEICHERVORRICHTUNG UND ENERGIESPEICHERVORRICHTUNG
COMPOSITION CONDUCTRICE, COMPOSITION CONDUCTRICE POUR FORMER UNE COUCHE DE BASE, COLLECTEUR AVEC COUCHE DE BASE DESTINÉ À ÊTRE UTILISÉ DANS UN DISPOSITIF DE STOCKAGE D'ÉNERGIE, ÉLECTRODE DESTINÉE À ÊTRE UTILISÉE DANS UN DISPOSITIF DE STOCKAGE D'ÉNERGIE ET DISPOSITIF DE STOCKAGE D'ÉNERGIE

(30) Priority: 19.04.2013 JP 2013088833; 20.06.2013 JP 2013129668; 20.02.2014 JP 2014030791
(43) Date of publication of application: 24.02.2016
(73) Proprietor: Toyo Ink SC Holdings Co., Ltd., Tokyo 104-0031 (JP); Toyocolor Co., Ltd., Chuo-ku, Tokyo 104-8381 (JP)
(72) Inventor: MOROISHI Yasuyuki, Tokyo 104-0031 (JP); MATSUMOTO Takeshi, Tokyo 104-8381 (JP); MASUOKA Tomoaki, Tokyo 104-0031 (JP)
(74) Representative: Maiwald Patent- und Rechtsanwaltsgesellschaft mbH
(86) International application number: PCT/JP2014/060580
(87) International publication number: WO 2014/171415

(56) References cited:
- WO-A1-2012/036288
- JP-A- 2006 024 550
- JP-A- 2012 129 104
- JP-A- 2013 048 043
- US-A- 5 286 415

## Description

### Technical Field

The present invention relates to a conductive composition, an underlayer-bearing current collector that is for use in an electrical storage device and obtained using the composition. The present invention also relates to an electrode for use in an electrical storage device and has such an underlayer. The present invention further relates to an electrical storage device obtained with such an electrode.

### Background Art

In recent years, small portable electronic devices such as digital cameras and cellular phones have been widely used. Such electronic devices are always required to have a minimum volume and a low weight. Therefore, cells to be installed in such devices are also required to have a smaller size, a lighter weight, and a higher capacity. Concerning large secondary cells to be installed in automobiles and the like, conventional lead storage cells are required to be replaced with other types of large secondary cells, which are therefore required to have a longer lifetime in various environments where they are used. Capacitors such as electric double-layer capacitors and lithium ion capacitors are also attracting attention as high-power, high-energy-density, electrical storage devices.

To meet such requirements, attention is focusing, for example, on the development of electrode mixture inks for use in forming electrodes for such electrical storage devices and the development of underlayer-forming compositions for use in forming underlayers for electrode composite layers, as well as the development of electrical storage devices such as capacitors and secondary cells including lithium ion secondary cells and alkaline secondary cells.

Important properties required for an electrode mixture ink or an underlayer-forming composition for use in forming an electrode include uniformity, with which an active material or a conductive carbon material is adequately dispersed, and adhesion between components of the electrode formed after the drying of the electrode mixture ink or the underlayer-forming composition.

The state of dispersion of an active material or a conductive carbon material in the electrode mixture ink or the state of dispersion of a conductive carbon material in the underlayer-forming composition is correlated with the state of distribution of the active material or the conductive carbon material in the resulting composite layer or correlated with the state of distribution of the conductive carbon material in the resulting underlayer, and can influence the physical properties of the resulting electrode and thus influence the performance of the resulting cell.

Therefore, how to disperse an active material or a conductive carbon material is an important aspect. In particular, highly conductive carbon materials have a large structure or specific surface area and thus strong cohesion, and it is difficult to uniformly mix and disperse such carbon materials in an electrode mixture ink or an underlayer-forming composition.

When the dispersibility or particle size of such carbon materials is insufficiently controlled, a problem occurs in which a uniform conductive network cannot be formed, so that the resulting electrode cannot have lower internal resistance and thus the electrode material cannot provide sufficient performance.

The electrode mixture ink or the underlayer-forming composition is also required to have adequate fluidity so that it can be applied to the surface of a metal foil for serving as a current collector. In addition, the electrode mixture ink or the underlayer-forming composition is required to have adequate viscosity so that a composite layer or an underlayer can be formed with a surface as flat as possible and with a uniform thickness from the composition. When an electrode mixture ink is applied after an underlayer is formed, the underlayer is also required to have solvent resistance for the formation of a composite layer.

On the other hand, after a composite layer or an underlayer is formed on a metal foil as a substrate from the electrode mixture ink or the underlayer-forming composition, the composite layer or the underlayer and the metal foil are often formed into pieces with the desired size and shape by cutting or punching. Therefore, the composite layer and the underlayer are required to have such a degree of hardness and adhesion that they can be prevented from being scratched, cracked, or peeled off during cutting or punching.

The adhesion between components of the electrode is also important because it significantly influences the performance of electrical storage devices.

For example, in the case of a lithium ion cell, if the adhesion between components of the electrode is low, the expansion and contraction of the active material, associated with the intercalation and deintercalation with lithium ions during the charge-discharge process, can cause breakage of the electrode structure and delamination of the current collector from other components of the electrode, which will lead to cell life reduction.

Cells are used in a variety of environments, and their life tends to decrease particularly in high-temperature environments. It is therefore important for them to have durability that allows them to maintain the adhesion between components of the electrode, maintain the conductivity of the electrode, and withstand charge-discharge cycles even in high-temperature environments.

Patent Literature 1 discloses an underlayer formed by coating an electrode-forming current collector with a conductive composition containing a conductive carbon powder and a water-soluble binder such as an acrylic acid polymer. Patent Literature 2 discloses an underlayer-forming composition prepared by mixing a carbon black powder and butyl rubber in toluene. Unfortunately, these compositions need to be further improved so that they can provide improved adhesion to a current collector when used to form an underlayer. In addition, they need to be further improved so that poor conductivity or coatability caused by insufficient dispersion of a carbon material can be improved and so that they can provide improved resistance to water and solvents, which is necessary for an electrode mixture ink to be applied as an upper layer thereon. Further improvements in them have also been demanded to increase cell life.

For such improvements, Patent Literatures 3 to 7 disclose a binder improved by addition of a crosslinking component, the use of highly conductive carbon fibers, and the use of an underlayer-forming composition that is produced with a dispersing agent so that it can form a highly conductive electrode. However, since cells are used in a variety of environments, further improvements in the adhesion between components of electrodes and in charge-discharge cycle characteristics are necessary for cells to withstand harsh environments such as high temperature.

### Citation List

### Patent Literatures

Patent Literature 1: JP 62-160656 A
Patent Literature 2: JP 63-121265 A
Patent Literature 3: JP 07-201362 A
Patent Literature 4: JP 2006-140142 A
Patent Literature 5: JP 2007-226969 A
Patent Literature 6: JP 2008-60060 A
Patent Literature 7: WO 2012/173072 A1

### Summary of Invention

### Technical Problem

It is an object of the present invention to provide a conductive composition that can provide good conductivity and adhesion, can form an electrical storage device with good charge-discharge cycle characteristics, can provide good dispersibility to a conductive carbon material, can provide good adhesion between electrode components, and can provide high water resistance to a current collector.

### Solution to Problem

The present invention is directed to a conductive composition according to claim 1.

The present invention is also directed to the conductive composition which is for use in forming an underlayer for an electrode for use in an electrical storage device.

The present invention is also directed to an underlayer-bearing current collector for use in an electrical storage device, the underlayer-bearing current collector including a current collector and an underlayer made from the conductive composition.

The present invention is also directed to an electrode for use in an electrical storage device including: a current collector; an underlayer made from the conductive composition; and a composite layer made from an electrode-forming composition including an electrode active material and a binder.

The present invention is also directed to an electrical storage device including: a positive electrode; a negative electrode; and an electrolyte, wherein the positive electrode and/or the negative electrode is the electrode for use in the electrical storage device stated above.

### Advantageous Effects of Invention

The conductive composition containing the conductive carbon material (A), the water-soluble resin binder (B), and the water-dispersed resin fine particle binder (C) in a specific ratio can form an underlayer with good adhesion to a current collector without reducing the dispersibility of the conductive carbon material in the composition, which makes it possible to provide an electrical storage device that can have good charge-discharge cycle characteristics even when used in a harsh environment such as high temperature.

### Description of Embodiments

An electrode for use in an electrical storage device can be obtained by a variety of methods. For example, the electrode can be obtained by forming a composite layer on the surface of a current collector such as a metal foil using
(1) a composition in the form of an ink (hereinafter, referred to as an "electrode mixture ink") containing an active material and a solvent,
(2) an electrode mixture ink containing an active material, a conduction supporting agent, and a solvent,
(3) an electrode mixture ink containing an active material, a binder, and a solvent, or
(4) an electrode mixture ink containing an active material, a conduction supporting agent, a binder, and a solvent.

Alternatively, the electrode can be obtained by a process that includes forming an underlayer on the surface of a metal foil current collector using an underlayer-forming composition containing a conductive carbon material and a liquid medium and then forming a composite layer on the underlayer using one of the electrode mixture inks (1) to (4) or other electrode mixture inks.

In any case, the state of dispersion of the conductive carbon material or the adhesion between electrode components influences the performance of an electrical storage device as described in detail in the section "Background Art." Therefore, the conductive composition of the present invention can be used to successfully form an underlayer.

### <Conductive composition>

As mentioned above, the conductive composition of the present invention can be used to form an underlayer for electrical storage devices. The conductive composition includes (A) a conductive carbon material, (B) a water-soluble resin binder, (C) a water-dispersed resin fine particle binder, and (D) an aqueous liquid medium.

The content of the conductive carbon material (A) is from 20% by weight to 70% by weight, preferably from 25% by weight to 60% by weight, based on the weight of the total solids in the conductive composition. If the content of the conductive carbon material (A) is too low, the resulting underlayer may fail to have sufficient conductivity. On the other hand, if the content of the conductive carbon material (A) is too high, durability such as coating adhesion may decrease.

The content of the water-soluble resin binder (B) is from 3% by weight to less than 40% by weight, preferably from 3% by weight to 20% by weight, based on the weight of the total solids in the water-soluble resin binder (B) and the water-dispersed resin fine particle binder (C). If the content of the water-soluble resin binder (B) is too low, the adhesion between electrode components may be insufficient. On the other hand, if the content of the water-soluble resin binder (B) is too high, insufficient water resistance may be provided, and a good underlayer may fail to be obtained. To form a good underlayer, it is very important to use the water-soluble resin binder (B) and the water-dispersed resin fine particle binder (C) together in the specified ratio.

In general, the proper viscosity of the conductive composition is preferably from 10 mPa·s to 30,000 mPa·s although it depends on the method for applying the conductive composition.

### <Conductive carbon material (A)>

The conductive carbon material (A) may be any type of carbon material having electrical conductivity. Examples include graphite, carbon black, conductive carbon fibers (carbon nanotubes, carbon nanofibers, carbon fibers), and fullerene, which may be used alone or in combination of two or more. Carbon black is preferably used in view of conductivity, easy availability, and cost.

There are various types of carbon black, such as furnace black produced by continuous pyrolysis of a gaseous or liquid raw material in a reaction furnace, Ketjen black produced especially with ethylene heavy oil as a raw material, channel black produced by burning raw material gas and bringing the flame into contact with the bottom of a steel channel to rapidly cool and precipitate the product, thermal black obtained by periodically repeating combustion and pyrolysis of raw material gas, and acetylene black produced especially with acetylene gas as a raw material, which may be used alone or in combination of two or more. Carbon black or hollow carbon having undergone a conventional oxidation treatment may also be used.

The oxidation treatment of carbon is a treatment that is performed to directly introduce (covalently bond) an oxygen-containing polar functional group such as a phenol, quinone, carboxyl, or carbonyl group onto the surface of carbon by treating carbon at high temperature in the air or secondarily treating carbon with nitric acid, nitrogen dioxide, ozone, or other materials. The oxidation treatment of carbon is generally performed to improve the dispersibility of carbon. In general, however, as the amount of the introduced functional group increases, the conductivity of carbon decreases. Therefore, it is preferable to use carbon not having undergone the oxidation treatment.

As the specific surface area of the carbon black used increases, the number of contact points between the carbon black particles increase, which is advantageous in reducing the internal resistance of the electrode. Specifically, the carbon black to be used preferably has a specific surface area (BET) of 20 m²/g to 1,500 m²/g, more preferably 50 m²/g to 1,500 m²/g, even more preferably 100 m²/g to 1,500 m²/g, as determined from the amount of nitrogen adsorption. If carbon black with a specific surface area of less than 20 m²/g is used, it may be difficult to obtain sufficient conductivity. Carbon black with a specific surface area of more than 1,500 m²/g may be difficult to obtain commercially.

The primary particle size of the carbon black used is preferably from 0.005 to 1 µm, more preferably from 0.01 to 0.2 µm. As used herein, the term "primary particle size" refers to the average of particle sizes measured with an electron microscope or the like.

In the conductive composition, the conductive carbon material (A) is preferably in the form of fine particles with a dispersed particle size of 0.03 µm to 5 µm. A composition containing the carbon material as a conduction supporting agent with a dispersed particle size of less than 0.03 µm may be difficult to produce. If a composition containing the carbon material as a conduction supporting agent with a dispersed particle size of more than 5 µm is used, some problems may occur, such as uneven distribution of the material in the composite coating and uneven distribution of electrode resistance.

As used herein, the term "dispersed particle size" refers to the particle size (D50) at which 50% of the population of particles are smaller and 50% of the population of particles are larger in the volume particle size distribution. The dispersed particle size can be determined using, for example, a common particle size analyzer such as a dynamic light scattering particle size analyzer (Microtrac UPA manufactured by NIKKISO CO., LTD).

Examples of commercially available carbon black include, but are not limited to, TOKABLACK #4300, #4400, #4500, or #5500 (furnace black, manufactured by Tokai Carbon Co., Ltd.), Printex L (furnace black, manufactured by Degussa), Raven 7000, 5750, 5250, 5000 Ultra III, or 5000 Ultra, Conductex SC Ultra or Conductex 975 Ultra, PUER BLACK 100, 115, or 205 (furnace black, manufactured by Columbian Chemicals Company), #2350, #2400B, #2600B, #30050B, #3030B, #3230B, #3350B, #3400B, or #5400B (furnace black, manufactured by Mitsubishi Chemical Corporation), MONARCH 1400, 1300, or 900, Vulcan XC-72R, or Black Pearls 2000 (furnace black, manufactured by Cabot Corporation), Ensaco 250G, Ensaco 260G, Ensaco 350G, or Super P-Li (manufactured by TIMCAL GRAPHITE & CARBON), Ketjen Black EC-300J or EC-600JD (manufactured by Akzo Nobel), and DENKA BLACK, DENKA BLACK HS-100 or FX-35 (acetylene black, manufactured by DENKI KAGAKU KOGYO KABUSHIKI KAISHA). Examples of graphite include, but are not limited to, artificial graphite and natural graphite such as scaly graphite, lump graphite, or earthy graphite. These may also be used in combination of two or more.

Conductive carbon fibers obtained by baking petroleum-derived raw materials are preferably used, and those obtained by baking plant-derived raw materials may also be used. Examples include VGCF, which is produced from petroleum-derived raw materials by Showa Denko K.K.

### <Water-soluble resin binder (B)>

The water-soluble resin binder (B) is a material that can be completely dissolved in water without causing separation or precipitation when 1 g of it is added to 99 g of water at 25°C, stirred, and allowed to stand at 25°C for 24 hours.

The water-soluble resin binder (B) may be any resin having water solubility as mentioned above, examples of which include acrylic resins, polyurethane resins, polyester resins, polyamide resins, polyimide resins, polyallylamine resins, phenolic resins, epoxy resins, phenoxy resins, urea resins, melamine resins, alkyd resins, formaldehyde resins, silicone resins, fluororesins, and polymer compounds including polysaccharide resins such as carboxymethyl cellulose. Modifications, blends, or copolymers of these reins may also be used as long as they are water-soluble. These binders may be used alone or in combination of two or more.

The molecular weight of the water-soluble resin binder (B) is not limited. Preferably, the water-soluble binder (B) has a weight average molecular weight of 5,000 to 2,000,000. The term "weight average molecular weight (Mw)" refers to the polystyrene-equivalent molecular weight determined by gel permeation chromatography (GPC).

### <Water-dispersed resin fine particle binder (C)>

The water-dispersed resin fine particle binder (C) corresponds to what is also generally called an aqueous emulsion, in which a binder resin is not dissolved but dispersed in the form of fine particles in water.

### (Structure of emulsion particles)

The particles in the water-dispersed resin fine particle binder (C) may have a multilayer structure or what is called a core-shell structure. The binder can have improved curing properties, improved drying properties, improved film-forming properties, or improved mechanical strength, for example, when a resin obtained by polymerizing a functional group-containing monomer as a principal monomer is localized in the core or shell of the binder or when the core and the shell of the binder are made different in Tg or composition.

### (Emulsion particle size)

In view of binding properties or particle stability, the water-dispersed resin fine particle binder (C) preferably has an average particle size of 10 to 500 nm, more preferably 10 to 300 nm. If the binder (C) contains a large number of coarse particles with a size of more than 1 µm, the particles may have lower stability. Therefore, the content of coarse particles with a size of more than 1 µm should preferably at most 5%. In this case, the term "average particle size" refers to the volume average particle size, which can be measured by dynamic light scattering.

The measurement of the average particle size by dynamic light scattering may be performed as follows. A crosslinked resin fine particle dispersion is diluted 200-to 1,000-fold with water depending on its solid content. About 5 ml of the dilution is injected into the cell of an analyzer (Microtrac manufactured by NIKKISO CO., LTD). The refractive index conditions of the solvent (water in the present invention) and the resin are input into the analyzer, depending on the sample, and then the dilution is measured. The average particle size is defined as the peak in the volume particle size distribution data (histogram) obtained in this measurement.

### <Crosslinked resin fine particles>

When a (meth)acrylic emulsion is used, the emulsion preferably contains the crosslinked resin fine particles described below. The term "crosslinked resin fine particles" refers to resin fine particles having an internal crosslinked structure (three-dimensional crosslinked structure). It is important that the inner part of the particles is crosslinked. The crosslinked structure of the resin fine particles can ensure the resistance to electrolyte leakage, and this effect can be enhanced by controlling the degree of crosslinking of the inner part of the particles. The crosslinked resin fine particles may also contain a specific functional group, which can contribute to their adhesion to a current collector or to electrode components. In addition, the crosslinked structure or the amount of the functional group can be so controlled that the resulting conductive composition can form an electrical storage device with high durability.

The internal crosslinking may be used in combination with crosslinking between particles (inter-particle crosslinking). In this case, however, the crosslinking agent component may leak to the electrolyte, or variations may occur in the process of forming the electrode, because the crosslinking agent is often added at a later stage. Therefore, the crosslinking agent should be used to such an extent that it will not reduce the resistance to electrolyte.

A (meth)acrylic emulsion containing crosslinked resin fine particles is preferably used. In such an emulsion, the crosslinked resin fine particles are resin fine particles obtained by emulsion polymerization of an ethylenically unsaturated monomer or monomers with a radical polymerization initiator in water in the presence of a surfactant. The (meth)acrylic emulsion is obtained by emulsion polymerization of ethylenically unsaturated monomers including at least one from the monomer group (C1) shown below and at least one from the monomer group (C2) shown below, in which the monomers (C1) and (C2) are present in the ratio shown below.

(C1) At least one monomer selected from the group consisting of an ethylenically unsaturated monomer (c1) having a monoalkoxysilyl group or polyalkoxysilyl groups and a monomer (c2) having two or more ethylenically unsaturated groups per molecule (content: 0.1 to 5% by weight)

(C2) An ethylenically unsaturated monomer (c3) other than the monomers (c1) and (c2) (content: 95 to 99.9% by weight) (Note that the total content of the monomers (c1) to (c3) is 100% by weight).

Unless otherwise stated, the monomers (c1) and (c3) refer to monomers having one ethylenically unsaturated group per molecule, among the ethylenically unsaturated monomers used to form the crosslinked resin fine particles in the (meth)acrylic emulsion, which is preferably used.

### <Monomer group (C1)>

Monomers belonging to the monomer group (C1) have a self-crosslinking reactive group (such as an alkoxysilyl group or an ethylenically unsaturated group) as a functional group, which is effective mainly in forming internal crosslinks in particles during the synthesis of the particles. The particles with their inner part crosslinked sufficiently can have improved resistance to electrolyte. Therefore, the crosslinked resin fine particles can be formed using a monomer or monomers from the monomer group (C1). In addition, when the particles are sufficiently crosslinked, they can have improved resistance to electrolyte.

Examples of the monomer (c1) having one ethylenically unsaturated group per molecule and an alkoxysilyl group include γ-methacryloxypropyltrimethoxysilane, γ-methacryloxypropyltriethoxysilane, γ-methacryloxypropyltributoxysilane, γ-methacryloxypropylmethyldimethoxysilane, γ-methacryloxypropylmethyldiethoxysilane, γ-acryloxypropyltrimethoxysilane, γ-acryloxypropyltriethoxysilane, γ-acryloxypropylmethyldimethoxysilane, γ-methacryloxymethyltrimethoxysilane, γ-acryloxymethyltrimethoxysilane, vinyltrimethoxysilane, vinyltriethoxysilane, vinyltributoxysilane, vinylmethyldimethoxysilane, and the like.

Examples of the monomer (c2) having two or more ethylenically unsaturated groups per molecule include ethylenically unsaturated group-containing (meth)acrylates such as allyl (meth)acrylate, 1-methylallyl (meth)acrylate, 2-methylallyl (meth)acrylate, 1-butenyl (meth)acrylate, 2-butenyl (meth)acrylate, 3-butenyl (meth)acrylate, 1,3-methyl-3-butenyl (meth)acrylate, 2-chloroallyl (meth)acrylate, 3-chloroallyl (meth)acrylate, o-allylphenyl (meth)acrylate, 2-(allyloxy)ethyl (meth)acrylate, allyllactyl (meth)acrylate, citronellyl (meth)acrylate, geranyl (meth)acrylate, rhodinyl (meth)acrylate, cinnamyl (meth)acrylate, diallyl maleate, diallylitaconic acid, vinyl (meth)acrylate, vinyl crotonate, vinyl oleate, vinyl linolenate, and 2-(2'-vinyloxyethoxy)ethyl (meth)acrylate; polyfunctional (meth)acrylates such as ethylene glycol di(meth)acrylate, triethylene glycol di(meth)acrylate, tetraethylene glycol di(meth)acrylate, trimethylolpropane tri(meth)acrylate, pentaerythritol tri(meth)acrylate, 1,1,1-trishydroxymethylethane diacrylate, 1,1,1-trishydroxymethylethane triacrylate, and 1,1,1-trishydroxymethylpropane triacrylate; divinyl compounds such as divinylbenzene and divinyl adipate; and dially compounds such as diallyl isophthalate, diallyl phthalate, and diallyl maleate.

The alkoxysilyl group or the ethylenically unsaturated group in the monomer (c1) or (c2) is mainly aimed at introducing a crosslinked structure into particles by undergoing self-condensation during polymerization or by undergoing polymerization. However, some of the alkoxysilyl or ethylenically unsaturated groups may remain in the inner part of the particles or on the surface of the particles even after the polymerization. The remaining alkoxysilyl or ethylenically unsaturated groups can contribute to crosslinking between particles of the binder composition. In particular, the alkoxysilyl group is advantageous in that it can effectively contribute to the improvement of the adhesion to the current collector.

A monomer from the monomer group (C1) is characterized in that it is used in an amount of 0.1 to 5% by weight, preferably 0.5 to 3% by weight, based on the total weight of all the ethylenically unsaturated monomers (100% by weight in total) used in the emulsion polymerization. If the amount of the monomer from the monomer group (C1) is less than 0.1% by weight, the particles may be insufficiently crosslinked and thus have lower resistance to electrolyte. If the amount of the monomer from the monomer group (C1) is more than 5% by weight, a problem with polymerization stability may occur in the process of the emulsion polymerization, or a problem with storage stability may occur even through the polymerization is possible.

### <Monomer group (C2)>

The crosslinked resin fine particles in the (meth)acrylic emulsion can be obtained by simultaneously subjecting the monomers (c1), (c2), and (c3) to emulsion polymerization, in which the monomer (c1) is a monomer having one ethylenically unsaturated group per molecule and an alkoxysilyl group as mentioned above, the monomer (c2) is a monomer having two or more ethylenically unsaturated groups per molecule as mentioned above, and the monomer (c3) is an ethylenically unsaturated group-containing monomer belonging to the monomer group (C2) and being other than the monomers (c1) and (c2).

The monomer (c3) may be any type of ethylenically unsaturated group-containing monomer other than the monomers (c1) and (c2). For example, the monomer (c3) may be at least one monomer selected from the group consisting of a monomer (c4) having one ethylenically unsaturated group per molecule and a monoepoxy group or polyepoxy groups, a monomer (c5) having one ethylenically unsaturated group per molecule and a monoamide group or polyamide groups, and a monomer (c6) having one ethylenically unsaturated group per molecule and a monohydroxyl group or polyhydroxyl groups. Alternatively, the monomer (c3) may be an ethylenically unsaturated group-containing monomer (c7) other than the monomers (c1), (c2), and (c4) to (c6).

When one of the monomers (c4) to (c6) is used, an epoxy group, an amide group, or a hydroxyl group can be allowed to remain inside the crosslinked resin fine particles or on the surface of the crosslinked resin fine particles, so that the physical properties such as the adhesion to the current collector can be improved. When the monomers (c4) to (c6) are used, their functional groups can easily remain inside the particles or on the surface of the particles even after the synthesis of the particles. Therefore, even when used in a small amount, they can be significantly effective for the adhesion to the current collector. The monomers (c4) to (c6) may be each partially used in the crosslinking reaction, and a good balance between the resistance to electrolyte and the adhesion can be achieved by controlling the degree of crosslinking of these functional groups.

Examples of the monomer (c4) having one ethylenically unsaturated group per molecule and a monoepoxy group or polyepoxy groups include glycidyl (meth)acrylate and 3,4-epoxycyclohexyl (meth)acrylate.

Examples of the monomer (c5) having one ethylenically unsaturated group per molecule and a monoamide group or polyamide groups include primary amide group-containing ethylenically unsaturated monomers such as (meth)acrylamide; alkylol(meth)acrylamides such as N-methylolacrylamide, N,N-di(methylol)acrylamide, and N-methylol-N-methoxymethyl(meth)acrylamide; monoalkoxy(meth)acrylamides such as N-methoxymethyl-(meth)acrylamide, N-ethoxymethyl-(meth)acrylamide, N-propoxymethyl-(meth)acrylamide, N-butoxymethyl-(meth)acrylamide, and N-pentoxymethyl-(meth)acrylamide; dialkoxy(meth)acrylamides such as N,N-di(methoxymethyl)acrylamide, N-ethoxymethyl-N-methoxymethylmethacrylamide, N,N-di(ethoxymethyl)acrylamide, N-ethoxymethyl-N-propoxymethylmethacrylamide, N,N-di(propoxymethyl)acrylamide, N-butoxymethyl-N-(propoxymethyl)methacrylamide, N,N-di(butoxymethyl)acrylamide, N-butoxymethyl-N-(methoxymethyl)methacrylamide, N,N-di(pentoxymethyl)acrylamide, and N-methoxymethyl-N-(pentoxymethyl)methacrylamide; dialkylamino(meth)acrylamides such as N,N-dimethylaminopropylacrylamide and N,N-diethylaminopropylacrylamide; dialkyl(meth)acrylamides such as N,N-dimethylacrylamide and N,N-diethylacrylamide; and keto group-containing (meth)acrylamides such as diacetone (meth)acrylamide.

Examples of the monomer (c6) having one ethylenically unsaturated group per molecule and a monohydroxyl group or polyhydroxyl groups include 2-hydroxyethyl (meth)acrylate, 2-hydroxypropyl (meth)acrylate, 4-hydroxybutyl (meth)acrylate, 2-(meth)acryloyloxyethyl-2-hydroxyethyl phthalate, glycerol mono(meth)acrylate, 4-hydroxyvinylbenzene, 1-ethynyl-1-cyclohexanol, and allyl alcohol.

The functional group of any of the monomers (c4) to (c6) may be partially consumed for intra-particle crosslinking by reacting during the polymerization for forming particles. One of the monomers (c4) to (c6) is characterized in that it is used in an amount of 0.1 to 20% by weight, preferably 1 to 15% by weight, more preferably 2 to 10% by weight, based on the total weight of all the ethylenically unsaturated monomers (100% by weight in total) used in the emulsion polymerization. If the content of one of the monomers (c4) to (c6) in all the ethylenically unsaturated monomers (100% by weight in total) used in the emulsion polymerization is less than 0.1% by weight, the particles after the polymerization may have only a small amount of the functional group remaining in their interior or on their surface, which cannot sufficiently contribute to the improvement of the adhesion to the current collector. If the content is more than 20% by weight, a problem with polymerization stability may occur in the process of the emulsion polymerization, or a problem with storage stability may occur even through the polymerization is possible.

The monomer (c7) may be any type of ethylenically unsaturated group-containing monomer other than the monomers (c1), (c2), and (c4) to (c6). Examples of the monomer (c7) include a monomer (c8) having one ethylenically unsaturated group per molecule and an alkyl group of 8 to 18 carbon atoms, a monomer (c9) having one ethylenically unsaturated group per molecule and a cyclic structure, and the like. When the monomer (c8) and/or the monomer (c9) is used for emulsion polymerization as the monomer (c7) (an additional monomer other than the above may also be used as the monomer (c7)), the total content of the monomers (c8) and (c9) in all the monomers having an ethylenically unsaturated group ((c1), (c2), (c4) to (c6), and (c7)) is preferably from 30 to 95% by weight. The monomer (c8) or (c9) is preferably used to impart stability to particles being synthesized or to provide high resistance to electrolyte. If the content is less than 30% by weight, there may be an adverse effect on the resistance to electrolyte. If the content is more than 95% by weight, there may be an adverse effect on the stability during the synthesis of the particles, or the particles may have lower stability over time although they are possible to synthesize.

Examples of the monomer (c8) having one ethylenically unsaturated group per molecule and an alkyl group of 8 to 18 carbon atoms include 2-ethylhexyl (meth)acrylate, lauryl (meth)acrylate, myristyl (meth)acrylate, cetyl (meth)acrylate, and stearyl (meth)acrylate.

The monomer (c9) having one ethylenically unsaturated group per molecule and a cyclic structure may be a cyclic ethylenically unsaturated monomer, an aromatic ethylenically unsaturated monomer, or the like. Examples of the cyclic ethylenically unsaturated monomer include cyclohexyl (meth)acrylate and isobornyl (meth)acrylate. Examples of the aromatic ethylenically unsaturated monomer include benzyl (meth)acrylate, phenoxyethyl (meth)acrylate, styrene, α-methylstyrene, 2-methylstyrene, chlorostyrene, allylbenzene, and ethynylbenzene.

Examples of the monomer (c7) other than the monomers (c8) and (c9) include alkyl group-containing ethylenically unsaturated monomers such as methyl (meth)acrylate, ethyl (meth)acrylate, propyl (meth)acrylate, n-butyl (meth)acrylate, pentyl (meth)acrylate, and heptyl (meth)acrylate; nitrile group-containing ethylenically unsaturated monomers such as (meth)acrylonitrile; perfluoroalkyl group-containing ethylenically unsaturated monomers having a perfluoroalkyl group of 1 to 20 carbon atoms, such as perfluoromethylmethyl (meth)acrylate, perfluoroethylmethyl (meth)acrylate, 2-perfluorobutylethyl (meth)acrylate, 2-perfluorohexylethyl (meth)acrylate, 2-perfluorooctylethyl (meth)acrylate, 2-perfluoroisononylethyl (meth)acrylate, 2-perfluorononylethyl (meth)acrylate, 2-perfluorodecylethyl (meth)acrylate, perfluoropropylpropyl (meth)acrylate, perfluorooctylpropyl (meth)acrylate, perfluorooctylamyl (meth)acrylate, and perfluorooctylundecyl (meth)acrylate; perfluoroalkyl group-containing ethylenically unsaturated compounds including perfluoroalkylalkylenes such as perfluorobutylethylene, perfluorohexylethylene, perfluorooctylethylene, and perfluorodecylethylene; polyether chain-containing ethylenically unsaturated compounds such as polyethylene glycol (meth)acrylate, methoxypolyethylene glycol (meth)acrylate, ethoxypolyethylene glycol (meth)acrylate, propoxypolyethylene glycol (meth)acrylate, n-butoxypolyethylene glycol (meth)acrylate, n-pentoxypolyethylene glycol (meth)acrylate, phenoxypolyethylene glycol (meth)acrylate, polypropylene glycol (meth)acrylate, methoxypolypropylene glycol (meth)acrylate, ethoxypolypropylene glycol (meth)acrylate, propoxypolypropylene glycol (meth)acrylate, n-butoxypolypropylene glycol (meth)acrylate, n-pentoxypolypropylene glycol (meth)acrylate, phenoxypolypropylene glycol (meth)acrylate, polytetramethylene glycol (meth)acrylate, methoxypolytetramethylene glycol (meth)acrylate, phenoxytetraethylene glycol (meth)acrylate, hexaethylene glycol (meth)acrylate, and methoxyhexaethylene glycol (meth)acrylate; polyester chain-containing ethylenically unsaturated compounds such as lactone-modified (meth)acrylates; quaternary ammonium base-containing ethylenically unsaturated compounds such as (meth)acrylic acid dimethylaminoethylmethyl chloride salt, trimethyl-3-(1-(meth)acrylamido-1,1-dimethylpropyl)ammonium chloride, trimethyl-3-(1-(meth)acrylamidopropyl)ammonium chloride, and trimethyl-3-(1-(meth)acrylamido-1,1-dimethylethyl)ammonium chloride; fatty acid vinyl compounds such as vinyl acetate, vinyl butyrate, vinyl propionate, vinyl hexanoate, vinyl caprylate, vinyl laurate, vinyl palmitate, and vinyl stearate; vinyl ether-based ethylenically unsaturated monomers such as butyl vinyl ether and ethyl vinyl ether; α-olefin ethylenically unsaturated monomers such as 1-hexene, 1-octene, 1-decene, 1-dodecene, 1-tetradecene, and 1-hexadecene; allyl monomers such as allyl acetate and allyl cyanide; vinyl monomers such as vinyl cyanide, vinylcyclohexane, and vinyl methyl ketone; and ethynyl monomers such as acetylene and ethynyltoluene.

Examples of the monomer (c7) other than the monomers (c8) and (c9) also include carboxyl group-containing ethylenically unsaturated monomers such as maleic acid, fumaric acid, itaconic acid, citraconic acid, or alkyl or alkenyl monoesters thereof, phthalic acid β-(meth)acryloxyethyl monoester, isophthalic acid β-(meth)acryloxyethyl monoester, terephthalic acid β-(meth)acryloxyethyl monoester, succinic acid β-(meth)acryloxyethyl monoester, acrylic acid, methacrylic acid, crotonic acid, and cinnamic acid; tert-butyl group-containing ethylenically unsaturated monomers such as tert-butyl (meth)acrylate; sulfonic acid group-containing ethylenically unsaturated monomers such as vinylsulfonic acid and styrenesulfonic acid; phosphate group-containing ethylenically unsaturated monomers such as 2-hydroxyethyl methacrylate acid phosphate; and keto group-containing ethylenically unsaturated monomers (monomers having one ethylenically unsaturated group per molecule and a keto group) such as diacetone (meth)acrylamide, acrolein, N-vinylformamide, vinyl methyl ketone, vinyl ethyl ketone, acetoacetoxyethyl (meth)acrylate, acetoacetoxypropyl (meth)acrylate, and acetoacetoxybutyl (meth)acrylate.

When the keto group-containing ethylenically unsaturated monomer is used as the monomer (c7), a polyfunctional hydrazide compound having two or more hydrazide groups capable of reacting with the keto group may be added as a crosslinking agent to the binder composition. In this case, the resulting binder composition can form a stronger coating film due to crosslinking between the keto group and the hydrazide group. This coating film has a higher level of binding properties and resistance to electrolyte. In addition, this coating film can have both flexibility and durability in charge-discharge cycles or high-temperature environments caused by generation of heat, which makes it possible to obtain a long-life electrical storage device whose discharge capacity decreases little in charge-discharge cycles.

When the resin fine particles are obtained by copolymerization with any of the ethylenically unsaturated monomers (c7) having a carboxyl group, a tert-butyl group (when heated, tert-butanol undergoes an elimination reaction to form a carboxyl group), a sulfonic acid group, and a phosphate group, respectively, any of these functional groups can remain inside the particles or on the surface of the particles even after the polymerization, which can be effective not only in improving the physical properties such as the adhesion to the current collector but also in preventing the aggregation during the synthesis or maintaining the stability of the particles after the synthesis. Therefore, these monomers are preferably used among the monomers (c7).

Some of the carboxyl groups, tert-butyl groups, sulfonic acid groups, and phosphate groups may be consumed for intra-particle crosslinking by reacting during the polymerization. When any of the monomers having a carboxyl group, a tert-butyl group, a sulfonic acid group, and a phosphate group, respectively, are used, the content of any of these monomers is preferably from 0.1 to 10% by weight, more preferably from 1 to 5% by weight, based on the total weight of all the ethylenically unsaturated monomers (100% by weight in total) used in the emulsion polymerization. If the content of any of the monomers having a carboxyl group, a tert-butyl group, a sulfonic acid group, and a phosphate group, respectively, is less than 0.1% by weight, the particles may have low stability. If the content is more than 10% by weight, the binder composition may have excessively high hydrophilicity, which may reduce the resistance to electrolyte. These functional groups may also be consumed for intra- or inter-particle crosslinking by reacting during drying.

For example, the carboxyl group can react with an epoxy group during the polymerization and drying so that a crosslinked structure can be introduced into the resin fine particles. Similarly, when the tert-butyl group is heated to a certain temperature or higher, tert-butanol is produced together with a carboxyl group, which can react with an epoxy group as mentioned above.

Two or more of these monomers (c7) may be used in combination to control the stability or glass transition temperature of the particles and to control the film forming properties of the particles or the physical properties of the coating film. For example, the use of (meth)acrylonitrile or the like in combination with another monomer is effective in producing rubber elasticity.

### <Method for producing crosslinked resin fine particles in (meth)acrylic emulsion>

The crosslinked resin fine particles in the (meth)acrylic emulsion can be synthesized by conventionally known emulsion polymerization methods.

### <Emulsifier for use in emulsion polymerization>

The emulsifier to be used may be of any conventionally known type, such as a reactive emulsifier having an ethylenically unsaturated group or a nonreactive emulsifier having no ethylenically unsaturated group.

Reactive emulsifiers having an ethylenically unsaturated group can be broadly divided into anionic and nonionic types. In particular, when an anionic or nonionic reactive emulsifier having an ethylenically unsaturated group is used, dispersed particles of the resulting copolymer can have very small sizes and a narrow size distribution, which are preferred because they can provide improved resistance to electrolyte when used as a binder to form an electrical storage device (e.g., secondary cell) electrode. Such anionic or nonionic reactive emulsifiers may be used alone or in combination of two or more.

Some examples of the anionic reactive emulsifier having an ethylenically unsaturated group will be shown below. It will be understood that such examples are not intended to limit the range of available emulsifiers.

Examples of the emulsifier include alkyl ethers (commercially available examples of which include AQUALON KH-05, KH-10, and KH-20 manufactured by Daiichi Kogyo Seiyaku Co., Ltd.; ADEKA REASOAP SR-10N and SR-20N manufactured by ADEKA CORPORATION; and LATEMUL PD-104 manufactured by Kao Corporation); sulfosuccinic acid esters (commercially available examples of which include LATEMUL S-120, S-120A, S-180P, and S-180A manufactured by Kao Corporation; and ELEMINOL JS-2 manufactured by Sanyo Chemical Industries, Ltd.); alkyl phenyl ethers or alkyl phenyl esters (commercially available examples of which include AQUALON H-2855A, H-3855B, H-3855C, H-3856, HS-05, HS-10, HS-20, and HS-30 manufactured by Daiichi Kogyo Seiyaku Co., Ltd.; and ADEKA REASOAP SDX-222, SDX-223, SDX-232, SDX-233, SDX-259, SE-10N, and SE-20N manufactured by ADEKA CORPORATION); (meth)acrylate sulfates (commercially available examples of which include ANTOX MS-60 and MS-2N manufactured by Nippon Nyukazai Co., Ltd.; and ELEMINOL RS-30 manufactured by Sanyo Chemical Industries, Ltd.); and phosphoric acid esters (commercially available examples of which include H-3330PL manufactured by Daiichi Kogyo Seiyaku Co., Ltd.; and ADEKA REASOAP PP-70 manufactured by ADEKA CORPORATION).

Examples of the nonionic reactive emulsifier include alkyl ethers (commercially available examples of which include ADEKA REASOAP ER-10, ER-20, ER-30, and ER-40 manufactured by ADEKA CORPORATION; and LATEMUL PD-420, PD-430, and PD-450 manufactured by Kao Corporation); alkyl phenyl ethers or alkyl phenyl esters (commercially available examples of which include AQUALON RN-10, RN-20, RN-30, and RN-50 manufactured by Daiichi Kogyo Seiyaku Co., Ltd.; and ADEKA REASOAP NE-10, NE-20, NE-30, and NE-40 manufactured by ADEKA CORPORATION); and (meth)acrylate sulfates (commercially available examples of which include RMA-564, RMA-568, and RMA-1114 manufactured by Nippon Nyukazai Co., Ltd).

If necessary, a nonreactive emulsifier with no ethylenically unsaturated group may be used in combination with the reactive emulsifier with an ethylenically unsaturated group when emulsion polymerization is performed to form the crosslinked resin fine particles in the (meth)acrylic emulsion. Nonreactive emulsifiers can be broadly divided into nonreactive anionic emulsifiers and nonreactive nonionic emulsifiers.

Examples of nonreactive nonionic emulsifiers include polyoxyethylene alkyl ethers such as polyoxyethylene lauryl ether and polyoxyethylene stearyl ether; polyoxyethylene alkyl phenyl ethers such as polyoxyethylene octyl phenyl ether and polyoxyethylene nonyl phenyl ether; sorbitan higher fatty acid esters such as sorbitan monolaurate, sorbitan monostearate, and sorbitan trioleate; polyoxyethylene sorbitan higher fatty acid esters such as polyoxyethylene sorbitan monolaurate; polyoxyethylene higher fatty acid esters such as polyoxyethylene monolaurate and polyoxyethylene monostearate; glycerin higher fatty acid esters such as oleic acid monoglyceride and stearic acid monoglyceride; and polyoxyethylene-polyoxypropylene block copolymers, and polyoxyethylene distyrenated phenyl ethers.

Examples of nonreactive anionic emulsifiers include higher fatty acid salts such as sodium oleate; alkyl aryl sulfonates such as sodium dodecylbenzene sulfonate; alkyl sulfates such as sodium lauryl sulfate; polyoxyethylene alkyl ether sulfates such as sodium polyoxyethylene lauryl ether sulfate; polyoxyethylene alkyl aryl ether sulfates such as sodium polyoxyethylene nonyl phenyl ether sulfate; alkyl sulfosuccinates and derivatives thereof, such as sodium monooctyl sulfosuccinate, sodium dioctyl sulfosuccinate, and sodium polyoxyethylene lauryl sulfosuccinate; and polyoxyethylene distyrenated phenyl ether sulfates.

The amount of the emulsifier used is not restricted and may be appropriately selected depending on the physical properties required when the crosslinked resin fine particles are finally used as a binder. In general, for example, the amount of the emulsifier is preferably in the range of 0.1 to 30 parts by weight, more preferably 0.3 to 20 parts by weight, even more preferably 0.5 to 10 parts by weight, based on 100 parts by weight of the total amount of the ethylenically unsaturated monomers.

A water-soluble protective colloid may also be used in the emulsion polymerization. Examples of the water-soluble protective colloid include polyvinyl alcohols such as partially saponified polyvinyl alcohol, fully saponified polyvinyl alcohol, and modified polyvinyl alcohol; cellulose derivatives such as hydroxyethyl cellulose, hydroxypropyl cellulose, and carboxymethyl cellulose salts; and natural polysaccharides such as guar gum. These may be used alone or in combination of two or more. The water-soluble protective colloid may be used in an amount of 0.1 to 5 parts by weight, preferably 0.5 to 2 parts by weight, based on 100 parts by weight of the total amount of the ethylenically unsaturated monomers.

### <Aqueous medium for use in emulsion polymerization>

The aqueous medium may be water, and any hydrophilic organic solvent may be used as long as the objects of the present invention are not compromised.

### <Polymerization initiator for use in emulsion polymerization>

Any polymerization initiator having the ability to initiate radical polymerization may be used, such as a known oil-soluble polymerization initiator or a known water-soluble polymerization initiator.

Examples of the oil-soluble polymerization initiator include, but are not limited to, organic peroxides such as benzoyl peroxide, tert-butyl peroxybenzoate, tert-butyl hydroperoxide, tert-butyl peroxy(2-ethylhexanoate), tert-butyl peroxy-3,5,5-trimethylhexanoate, and di-tert-butyl peroxide; and azobis compounds such as 2,2'-azobisisobutyronitrile, 2,2'-azobis-2,4-dimethylvaleronitrile, 2,2'-azobis(4-methoxy-2,4-dimethylvaleronitrile), and 1,1'-azobiscyclohexane-1-carbonitrile. These may be used alone or in combination or two or more. Any of these polymerization initiators are preferably used in an amount of 0.1 to 10.0 parts by weight based on 100 parts by weight of the ethylenically unsaturated monomers.

In the present invention, a water-soluble polymerization initiator is preferably used, such as ammonium persulfate, potassium persulfate, hydrogen peroxide, 2,2'-azobis(2-methylpropionamidine)dihydrochloride, or other conventionally known initiators. If desired, a reducing agent may be used in combination with the polymerization initiator when the emulsion polymerization is performed. This can accelerate the emulsion polymerization rate and facilitate the emulsion polymerization at low temperature. Examples of such a reducing agent include reducing organic compounds such as ascorbic acid, erythorbic acid, tartaric acid, citric acid, glucose, and metal salts of formaldehyde sulfoxylate or the like; reducing inorganic compounds such as sodium thiosulfate, sodium sulfite, sodium bisulfite, and sodium metabisulfite; and ferrous chloride, Rongalite, and thiourea dioxide. Any of these reducing agents are preferably used in an amount of 0.05 to 5.0 parts by weight based on 100 parts by weight of the total amount of the ethylenically unsaturated monomers.

### <Emulsion polymerization conditions>

The polymerization may be performed by photochemical reaction or exposure to radiation instead of using the polymerization initiator. The polymerization temperature should be equal to or higher than the temperature at which each polymerization initiator can initiate the polymerization. For example, when a peroxide polymerization initiator is used, the polymerization temperature may be generally about 70°C. The polymerization time is generally, but not limited to, 2 to 24 hours.

### <Other materials for use in the reaction>

If necessary, a buffer such as sodium acetate, sodium citrate, or sodium bicarbonate or a chain transfer agent such as octyl mercaptan, 2-ethylhexyl thioglycolate, octyl thioglycolate, stearyl mercaptan, lauryl mercaptan, tert-dodecyl mercaptan, or other mercaptans may be used in an appropriate amount.

When the polymerization for forming the crosslinked resin fine particles is performed using an acidic functional group-containing monomer such as a carboxyl group-containing ethylenically unsaturated monomer, neutralization with a basic compound may be performed before or after the polymerization. The neutralization may be performed with ammonia, an alkylamine such as trimethylamine, triethylamine, or butylamine; an alcoholamine such as 2-dimethylaminoethanol, diethanolamine, triethanolamine, or aminomethyl propanol; or other bases such as morpholine. A highly-volatile base is highly effective for drying, and aminomethyl propanol or ammonia is a preferred base.

### <Properties of crosslinked resin fine particles>

### (Glass transition temperature)

The crosslinked resin fine particles preferably have a glass transition temperature (hereinafter also referred to as Tg) of -50 to 70°C, more preferably -30 to 30°C. If the Tg is lower than -50°C, the electrode active material may be excessively covered with the binder, which may tend to increase the impedance. If the Tg is higher than 70°C, the binder may have lower flexibility or binding capacity, which may degrade the adhesion of the conductive carbon material to the current collector or degrade the underlayer forming ability. The glass transition temperature is the value determined with a DSC (differential scanning calorimeter).

The measurement of the glass transition temperature with a DSC (differential scanning calorimeter) may be performed as follows. About 2 mg of a solid resin obtained by drying the crosslinked resin fine particles is weighed on an aluminum pan. The test vessel is then placed in the measurement holder of the DSC, in which a chart is obtained under 10°C/minute temperature-rise conditions. The endothermic peak is read from the chart. The glass transition temperature is defined as the temperature at the peak.

### (Structure of particles)

The crosslinked resin fine particles may have a multilayer structure or what is called a core-shell structure. For example, the resin obtained by polymerizing the functional group-containing monomer as a principal monomer may be localized in the core or shell of the binder, or the core and the shell of the binder may be made different in Tg or composition, so that the binder can have improved curing properties, improved drying properties, improved film-forming properties, or improved mechanical strength.

### (Particle size)

In view of the particle stability or the ability to bind electrode active materials, the crosslinked resin fine particles preferably have an average particle size of 10 to 500 nm, more preferably 30 to 300 nm. If they contain a large number of coarse particles with a size of more than 1 µm, the particles may have lower stability. Therefore, the content of coarse particles with a size of more than 1 µm should preferably at most 5% by weight. In this case, the term "average particle size" refers to the volume average particle size, which can be measured by dynamic light scattering.

The measurement of the average particle size by dynamic light scattering may be performed as follows. A dispersion of the crosslinked resin fine particles is diluted 200- to 1,000-fold with water depending on its solid content. About 5 ml of the dilution is injected into the cell of an analyzer (Microtrac manufactured by NIKKISO CO., LTD). The refractive index conditions of the solvent (water in the present invention) and the resin are input into the analyzer, depending on the sample, and then the dilution is measured. The average particle size is defined as the peak in the volume particle size distribution data (histogram) obtained in this measurement.

### <Uncrosslinked compound (E) that may be added to the polymer resin fine particles>

Besides the crosslinked resin fine particles, the (meth)acrylic emulsion preferably further contains at least one uncrosslinked compound (E) selected from the group consisting of an uncrosslinked, epoxy group-containing compound, an uncrosslinked, amide group-containing compound, an uncrosslinked, hydroxyl group-containing compound, and an uncrosslinked, oxazoline group-containing compound (hereinafter, also referred to as the compound (E)). The compound (E) is insoluble but dispersible in the aqueous liquid medium.

The uncrosslinked, functional group-containing compound as the compound (E) differs from the compound, such as the monomer belonging to the monomer group (C1), used to form the internal crosslinked structure (three-dimensionally crosslinked structure) in the (meth)acrylic emulsion. The uncrosslinked, functional group-containing compound as the compound (E) is a compound that may be added after the emulsion polymerization for forming the resin fine particles (for forming the polymer) (and therefore does not contribute to the formation of the internal crosslinked structure of the resin fine particles). Therefore, the term "uncrosslinked" means no contribution to the formation of the internal crosslinked structure (three-dimensional crosslinked structure) in the (meth)acrylic emulsion.

The resistance to electrolyte can be ensured when the (meth)acrylic emulsion has the crosslinked structure. In addition, when the compound (E) is used, at least one functional group in the compound (E), selected from the epoxy group, the amide group, the hydroxyl group, and the oxazoline group, can contribute to the adhesion to the current collector or the adhesion between electrode components. Moreover, the crosslinked structure or the amount of the functional group can be so controlled that the resulting conductive composition can form an electrical storage device with high durability.

In the (meth)acrylic emulsion, the inner part of the resin fine particles should be crosslinked. When the degree of crosslinking of the inner part of the particles is adjusted to an appropriate level, the resistance to electrolyte can be ensured. Moreover, when at least one uncrosslinked compound (E) selected from the group consisting of an uncrosslinked, epoxy group-containing compound, an uncrosslinked, amide group-containing compound, an uncrosslinked, hydroxyl group-containing compound, and an uncrosslinked, oxazoline group-containing compound is added to functional group-containing, crosslinked, resin fine particles, the epoxy, amide, hydroxyl, or oxazoline group can act on the current collector to improve the adhesion to the current collector or the adhesion between electrode components effectively. The functional group of the compound (E) is also stable against heat during the long-term storage or the production of the electrode. Therefore, the compound (E) can be significantly effective for the adhesion to the current collector even when used in a small amount. The compound (E) can also provide high storage stability. To control the flexibility of the binder or the resistance of the binder to electrolyte, the compound (E) may be allowed to react with functional groups in the crosslinked resin fine particles. However, if the functional group of the compound (E) is excessively consumed to react with functional groups in the functional group-containing, crosslinked resin fine particles, only a small amount of the functional group can interact with the current collector or the electrode components. Therefore, the reaction between the compound (E) and the crosslinked resin fine particles in the (meth)acrylic emulsion should be to such an extent that the adhesion to the current collector or the electrode components will not decrease. When some of the functional groups of the compound (E) is used for the crosslinking reaction (or when the compound (E) is a polyfunctional compound), the degree of crosslinking of these functional groups may be controlled so that a good balance between the adhesion and the resistance to electrolyte can be achieved.

### <Uncrosslinked, epoxy group-containing compound>

Examples of the uncrosslinked, epoxy group-containing compound include epoxy group-containing ethylenically unsaturated monomers such as glycidyl (meth)acrylate and 3,4-epoxycyclohexyl (meth)acrylate; radical polymerization-derived resins obtained by polymerization of ethylenically unsaturated monomers including the epoxy group-containing ethylenically unsaturated monomer; polyfunctional epoxy compounds such as ethylene glycol glycidyl ether, polyethylene glycol diglycidyl ether, glycerin diglycidyl ether, glycerin triglycidyl ether, 1,6-hexanediol diglycidyl ether, trimethylolpropane triglycidyl ether, diglycidyl aniline, N,N,N',N'-tetraglycidyl-m-xylenediamine, and 1,3-bis(N,N'-diglycidylaminomethyl)cyclohexane; and epoxy resins such as bisphenol A-epichlorohydrin epoxy resins and bisphenol F-epichlorohydrin epoxy resins.

Particularly preferred examples of the epoxy group-containing compound include epoxy resins such as bisphenol A-epichlorohydrin epoxy resins and bisphenol F-epichlorohydrin epoxy resins; and radical polymerization-derived resins obtained by polymerization of ethylenically unsaturated monomers including the epoxy group-containing ethylenically unsaturated monomer. The epoxy resins can be expected to produce such a synergistic effect that their bisphenol skeleton can improve the resistance to electrolyte while the hydroxyl groups in the skeleton can improve the adhesion to the current collector. The radical polymerization-derived resins obtained by polymerization of ethylenically unsaturated monomers including an epoxy group-containing ethylenically unsaturated monomer can be expected to produce such an effect that a high content of epoxy groups in the resin skeleton can improve the adhesion to the current collector while the resins can more improve the resistance to electrolyte than the monomers.

### <Uncrosslinked, amide group-containing compound>

Examples of the uncrosslinked, amide group-containing compound include primary amide group-containing compounds such as (meth)acrylamide; alkylol(meth)acrylamide compounds such as N-methylolacrylamide, N,N-di(methylol)acrylamide, and N-methylol-N-methoxymethyl(meth)acrylamide; monoalkoxy(meth)acrylamide compounds such as N-methoxymethyl-(meth)acrylamide, N-ethoxymethyl-(meth)acrylamide, N-propoxymethyl-(meth)acrylamide, N-butoxymethyl-(meth)acrylamide, and N-pentoxymethyl-(meth)acrylamide; dialkoxy(meth)acrylamide compounds such as N,N-di(methoxymethyl)acrylamide, N-ethoxymethyl-N-methoxymethylmethacrylamide, N,N-di(ethoxymethyl)acrylamide, N-ethoxymethyl-N-propoxymethylmethacrylamide, N,N-di(propoxymethyl)acrylamide, N-butoxymethyl-N-(propoxymethyl)methacrylamide, N,N-di(butoxymethyl)acrylamide, N-butoxymethyl-N-(methoxymethyl)methacrylamide, N,N-di(pentoxymethyl)acrylamide, and N-methoxymethyl-N-(pentoxymethyl)methacrylamide; dialkylamino(meth)acrylamide compounds such as N,N-dimethylaminopropylacrylamide and N,N-diethylaminopropylacrylamide; dialkyl(meth)acrylamide compounds such as N,N-dimethylacrylamide and N,N-diethylacrylamide; keto group-containing (meth)acrylamide compounds such as diacetone (meth)acrylamide, and amide group-containing ethylenically unsaturated monomers derived from the above; and radical polymerization-derived resins obtained by polymerization of ethylenically unsaturated monomers including the amide group-containing ethylenically unsaturated monomer.

Particularly preferred examples of the amide group-containing compound include radical polymerization-derived resins obtained by polymerization of ethylenically unsaturated monomers including an amide group-containing ethylenically unsaturated monomer such as acrylamide. It can be expected that a higher content of amide groups in the resin skeleton can effectively improve the adhesion to the current collector and that the resins can more effectively improve the resistance to electrolyte than the monomers.

### <Uncrosslinked, hydroxyl group-containing compound>

Examples of the uncrosslinked, hydroxyl group-containing compound include hydroxyl group-containing ethylenically unsaturated monomers such as 2-hydroxyethyl (meth)acrylate, 2-hydroxypropyl (meth)acrylate, 4-hydroxybutyl (meth)acrylate, glycerol mono(meth)acrylate, 4-hydroxyvinylbenzene, 1-ethynyl-1-cyclohexanol, and allyl alcohol; radical polymerization-derived resins obtained by polymerization of ethylenically unsaturated monomers including the hydroxyl group-containing ethylenically unsaturated monomer; linear aliphatic diols such as ethylene glycol, diethylene glycol, 1,3-propanediol, 1,4-butanediol, 1,5-pentanediol, and 1,6-hexanediol; branched aliphatic diols such as propylene glycol, neopentyl glycol, 3-methyl-1,5-pentanediol, and 2,2-diethyl-1,3-propanediol; and cyclic diols such as 1,4-bis(hydroxymethyl)cyclohexane.

Particularly preferred examples of the hydroxyl group-containing compound include radical polymerization-derived resins obtained by polymerization of ethylenically unsaturated monomers including a hydroxyl group-containing ethylenically unsaturated monomer; or cyclic diols. The radical polymerization-derived resins obtained by polymerization of ethylenically unsaturated monomers including a hydroxyl group-containing ethylenically unsaturated monomer can be expected to produce such an effect that a higher content of hydroxyl groups in the resin skeleton can improve the adhesion to the current collector while the resins can more improve the resistance to electrolyte than the monomers. The cyclic diols can be expected to produce such an effect that the cyclic structure of their skeleton can improve the resistance to electrolyte.

### <Uncrosslinked, oxazoline group-containing compound>

Examples of the uncrosslinked, oxazoline group-containing compound include 2'-methylenebis(2-oxazoline), 2,2'-ethylenebis(2-oxazoline), 2,2'-ethylenebis(4-methyl-2-oxazoline), 2,2'-propylenebis(2-oxazoline), 2,2'-tetramethylenebis(2-oxazoline), 2,2'-hexamethylenebis(2-oxazoline), 2,2'-octamethylenebis(2-oxazoline), 2,2'-p-phenylenebis(2-oxazoline), 2,2'-p-phenylenebis(4,4'-dimethyl-2-oxazoline), 2,2'-p-phenylenebis(4-methyl-2-oxazoline), 2,2'-p-phenylenebis(4-phenyl-2-oxazoline), 2,2'-m-phenylenebis(2-oxazoline), 2,2'-m-phenylenebis(4-methyl-2-oxazoline), 2,2'-m-phenylenebis(4,4'-dimethyl-2-oxazoline), 2,2'-m-phenylenebis(4-phenylenebis-2-oxazoline), 2,2'-o-phenylenebis(2-oxazoline), 2,2'-o-phenylbis(4-methyl-2-oxazoline), 2,2'-bis(2-oxazoline), 2,2'-bis(4-methyl-2-oxazoline), 2,2'-bis(4-ethyl-2-oxazoline), 2,2'-bis(4-phenyl-2-oxazoline), and radical polymerization-derived, oxazoline group-containing resins.

Particularly preferred examples of the oxazoline group-containing compound include phenylenebisoxazoline compounds such as 2'-p-phenylenebis(2-oxazoline) or radical polymerization-derived resins obtained by polymerization of ethylenically unsaturated monomers including an oxazoline group-containing ethylenically unsaturated monomer. The phenylenebisoxazoline compounds are effective in improving the resistance to electrolyte because they have a phenyl group in the skeleton. The radical polymerization-derived resins obtained by polymerization of ethylenically unsaturated monomers including an oxazoline group-containing ethylenically unsaturated monomer can improve the adhesion to the current collector, because they have a large number of oxazoline groups in the resin skeleton, and can more improve the resistance to electrolyte than the monomers for them.

### <Content and molecular weight of compound (E)>

The compound (E) is preferably added in an amount of 0.1 to 50 parts by weight, more preferably 5 to 40 parts by weight, based on 100 parts by weight of the solid in the crosslinked resin fine particles. If the amount of the compound (E) added is less than 0.1 parts by weight, the amount of the functional group capable of contributing to the adhesion to the current collector may be too small to sufficiently contribute to the improvement of the adhesion to the current collector. If the amount of the compound (E) added is more than 50 parts by weight, there may be an adverse effect on the binder performance, such as leakage of the compound (E) to the electrolyte. Two or more compounds (E) may also be used in combination.

The molecular weight of the compound (E) is not limited. Preferably, the compound (E) has a weight average molecular weight of 1,000 to 1,000,000, more preferably 5,000 to 500,000. If the weight average molecular weight is less than 1,000, the effect on the adhesion to the current collector may be insufficient. If the average molecular weight is more than 1,000,000, the compound may have high viscosity so that its handleability may be low during the production of the electrode. The weight average molecular weight is the polystyrene-equivalent value measured by gel permeation chromatography (GPC) method.

### <Aqueous liquid medium (D)>

Water is preferably used as the aqueous liquid medium (D). If necessary, for example, a water-compatible liquid medium may also be used to improve the ability to form a coating on the current collector. Examples of the water-compatible liquid medium include alcohols, glycols, cellosolves, aminoalcohols, amines, ketones, carboxylic acid amides, phosphoric acid amides, sulfoxides, carboxylic esters, phosphoric esters, ethers, and nitriles, which may be used to such an extent that they are compatible with water.

### <Other additives>

If necessary, the conductive composition may further contain a film-formation supporting agent, an antifoaming agent, a leveling agent, an antiseptic, a pH adjuster, a viscosity modifier, or the like.

The conductive composition may also be used to form an underlayer for use in an electrode for use in an electrical storage device. Therefore, in order to suppress the degradation of the charge-discharge cycle performance of the electrical storage device, a material capable of adsorbing or consuming an acid produced by the reaction of the electrolyte with impurities in the electrode may be added to the conductive composition.

Examples of the material capable of adsorbing an acid produced by the reaction of the electrolyte include, but are not limited to, magnesium oxide (MgO), aluminum oxide (Al₂O₃), boron oxide (B₂O₃), gallium oxide (Ga₂O₃), and indium oxide (In₂O₃).

The material capable of consuming an acid produced by the reaction of the electrolyte may be of any type as long as it is not corrosive to the current collector. Examples include metal carbonates such as magnesium carbonate and calcium carbonate; metal salts of organic acids, such as sodium carboxylate, potassium carboxylate, sodium sulfonate, potassium sulfonate, sodium benzoate, and potassium benzoate; silicates such as sodium silicate, potassium silicate, aluminum silicate, magnesium silicate, and silicon dioxide; and alkaline hydroxides such as magnesium hydroxide.

When the conductive composition is for use in forming an underlayer for an electrode for use in an electrical storage device, a material capable of generating gas when at least a certain temperature is reached or a material having a positive temperature coefficient of resistance may also be added to the conductive composition in order to suppress the overcharge of the electrical storage device or to suppress the thermal runaway at the occurrence of short circuit.

Examples of the material capable of generating gas when at least a certain temperature is reached include carbonates such as lithium carbonate, zinc carbonate, lead carbonate, and strontium carbonate; and expanded graphite.

Examples of the material having a positive temperature coefficient of resistance include PTC materials and polymer PTC materials. PTC materials are materials that sharply increase in resistance as their temperature becomes higher than their Curie temperature, examples of which include BaTiMO₂ (M is at least one element from Cr, Pb, Ca, Sr, Ce, Mn, La, Mn, Y, Nb, and Nd).

Polymer PTC materials are materials that can cause an increase in resistance by taking advantage of polymer volume change upon heating. When a polymer PTC material is used, the polymer can expand or shrink at high temperature to cut off the conductive paths formed by the conductive carbon material (A) and thus to increase the resistance, whereas at low temperature, a current can flow through the conductive paths. Examples of such a polymer PTC material include polyethylene, polypropylene, polyethylene terephthalate, polyether nitrile, polyimide, polyamide, polytetrafluoroethylene, styrene butadiene rubber, polyacrylonitrile, polymethyl acrylate, polymethyl methacrylate, polyvinyl chloride, polyvinylidene fluoride, epoxy resin, and any copolymer or blend thereof.

### <Disperser and mixer>

The conductive composition or the electrode mixture ink described below can be obtained using a disperser, a mixer, or any other apparatus commonly used in pigment dispersion or other processes.

Examples include, but are not limited to, mixers such as dispersers, homomixers, or planetary mixers; homogenizers such as CLEARMIX manufactured by M Technique Co., Ltd. or FILMIX manufactured by PRIMIX Corporation; media-type dispersers such as paint conditioners (manufactured by Red Devil Equipment Company), ball mills, sand mills (such as DYNO-MILL manufactured by SHINMARU ENTERPRISES CORPORATION), attritors, pearl mills (such as DCP Mill manufactured by Eirich), or co-ball mills; wet jet mills (such as Genus PY manufactured by Genus Co., Ltd., Star Burst manufactured by Sugino Machine Limited, and Nanomizer manufactured by NANOMIZER Inc.), medialess dispersers such as CLEAR SS-5 manufactured by M Technique Co., Ltd. or MICROS manufactured by Nara Machinery Co., Ltd., and others such as roll mills. The disperser to be used preferably has undergone a treatment for preventing contamination with metal from the disperser.

For example, when a media-type disperser is used in the process, the disperser preferably has a ceramic or resin agitator and a ceramic or resin vessel, or the disperser preferably has a metallic agitator and a vessel whose surface has undergone tungsten carbide spray coating or resin coating. In addition, glass beads or ceramic beads such as zirconia or alumina beads are preferably used as media. When a roll mill is used, ceramic rolls are preferably used. One or more dispersers may be used alone or in combination. When particles of the positive or negative electrode active material can easily crack or break on strong impact, a medialess disperser such as a roll mill or a homogenizer is more preferred than a media-type disperser.

### <Underlayer-bearing current collector and electrode for use in electrical storage device>

The underlayer-bearing current collector for use in an electrical storage device includes a current collector and an underlayer disposed on the current collector and made from the conductive composition. The electrode for use in an electrical storage device includes a current collector, an underlayer disposed on the current collector and made from the conductive composition, and a composite layer disposed on the underlayer and made from an electrode forming composition (electrode mixture ink) including an electrode active material and a binder.

### <Current collector>

The current collector used to form the electrode may be of any material or shape. The material or shape for the current collector may be appropriately selected from those suitable for a variety of electrical storage devices. For example, the current collector may be made of aluminum, copper, nickel, titanium, stainless steel, or other metals or alloys. In the case of a lithium-ion cell, aluminum and copper are particularly preferred as positive and negative electrode materials, respectively. A general form of the current collector is a foil on a flat sheet. Alternatively, a current collector with a roughened surface, a perforated foil current collector, or a mesh current collector may also be used.

Any method known in the art may be used to apply the conductive composition or the electrode mixture ink described below to the current collector. Specifically, the application method may be die coating, dip coating, roll coating, doctor coating, knife coating, spray coating, gravure coating, screen printing, or electrostatic coating. The drying process may be performed using air drying, a fan dryer, a warm-air dryer, an infrared heater, a far infrared heater, or any other means.

After the application, planographic press or rolling with calender rolls or other means may also be performed. The underlayer generally has a thickness of 0.1 µm to 5 µm, preferably 0.1 µm to 2 µm. The electrode composite layer generally has a thickness of 1 µm to 500 µm, preferably 10 µm to 300 µm.

### <Electrode mixture ink>

As mentioned above, a common electrode mixture ink for used in electrical storage devices includes an active material and a solvent as essential components and optionally a conduction supporting agent and a binder.

The electrode mixture ink preferably contains the active material as much as possible. For example, the active material preferably makes up 80% by weight to 99% by weight of the solids in the electrode mixture ink. When the electrode mixture ink contains a conduction supporting agent, the content of the conduction supporting agent is preferably 0.1 to 15% by weight based on the weight of the solids in the electrode mixture ink. When the electrode mixture ink contains a binder, the content of the binder is preferably 0.1 to 15% by weight based on the weight of the solids in the electrode mixture ink.

Although it depends on the method of application, the electrode mixture ink preferably has a viscosity of 100 mPa·s to 30,000 mPa·s with its solid content in the range of 30 to 90% by weight.

### <Active material>

The active material for use in the electrode mixture ink will be described below.

Positive electrode active materials for use in lithium-ion secondary cells include, but are not limited to, metal oxides, metal compounds such as metal sulfides, and conductive polymers, which are capable of being doped or intercalated with lithium ions.

Examples include oxides of transition metals such as Fe, Co, Ni, and Mn, lithium-containing complex oxides, and inorganic compounds such as transition metal sulfides. Specific examples include powders of transition metal oxides such as MnO, V₂O₅, V₆O₁₃, and TiO₂, powders of lithium-transition metal complex oxides such as lithium nickelate, lithium cobaltate, and lithium manganate of layered structure, and lithium manganate of spinel structure, phosphate compounds of olivine structure, such as iron lithium phosphate materials, and powders of transition metal sulfides such as TiS₂ and FeS.

Conductive polymers such as polyaniline, polyacetylene, polypyrrole, and polythiophene may also be used. A mixture of any of the above inorganic compounds and any of the above organic compounds may also be used.

Negative electrode active materials for use in lithium-ion secondary cells may be of any type capable of being doped or intercalated with lithium ions. Examples include metal Li, alloys thereof such as tin alloys, silicon alloys, and lead alloys, metal oxides such as LiₓFe₂O₃, LiₓFe₃O₄, LiₓWO₂, lithium titanate, lithium vanadate, and lithium silicate, conductive polymers such as polyacetylene and poly-p-phenylene, amorphous carbonaceous materials such as soft carbon and hard carbon, carbonaceous powders such as artificial graphite such as a highly graphitized carbon material or natural graphite, and carbon materials such as carbon black, mesophase carbon black, carbon materials produced by baking resin, vapor-deposited carbon fibers, and carbon fibers. These negative electrode active materials may be used alone or in combination of two or more.

These electrode active materials preferably have a particle size in the range of 0.05 to 100 µm, more preferably in the range of 0.1 to 50 µm. In the electrode mixture ink, the electrode active material preferably has a dispersed particle size of 0.5 to 20 µm. As used herein, the term "dispersed particle size" refers to the particle size (D50) at which 50% of the population of particles are smaller and 50% of the population of particles are larger in the volume particle size distribution. The dispersed particle size can be determined using, for example, a common particle size analyzer such as a dynamic light scattering particle size analyzer (Microtrac UPA manufactured by NIKKISO CO., LTD).

Examples of electrode active materials for use in electric double-layer capacitors include, but are not limited to, activated carbon, polyacene, carbon whiskers, graphite, and powders or fibers thereof. Preferred examples of electrode active materials for use in electric double-layer capacitors include activated carbons produced by activation of phenolic resins, coconut shells, rayon, acrylic resins, coal/petroleum pitch coke, mesocarbon microbeads (MCMB), or the like. Among activated carbons with the same weight, those with a larger specific surface area can form a larger interface and thus are more preferred. Specifically, the specific surface area is preferably 30 m²/g or more, more preferably 500 to 5,000 m²/g, even more preferably 1,000 to 3,000 m²/g. These electrode active materials may be used alone or in combination of two or more. Two or more carbon materials with different average particle sizes or different particle size distributions may be used in combination.

Positive electrode active materials for use in lithium-ion capacitors may be of any type capable of being doped and de-doped with lithium ions and anions reversibly, examples of which include activated carbon powders. Activated carbons preferably have a dispersed particle size of 0.1 µm to 20 µm. The term "dispersed particle size" has the same meaning as defined above.

Negative electrode active materials for use in lithium-ion capacitors may be of any type capable of being doped and de-doped with lithium ions reversibly, examples of which include graphite materials such as artificial graphite and natural graphite. Graphite materials preferably have a dispersed particle size of 0.1 µm to 20 µm. The term "dispersed particle size" has the same meaning as defined above.

Examples of positive electrode active materials for use in air cells include Pt, Co, MnO₂, CeO₂, TiO₂, Co₃O₄, Fe₂O₃, Fe₃O₄, NiO, CuO, and other inorganic ceramic materials; cobalt phthalocyanine, iron porphyrin, and other organic complexes; and composite materials thereof. The same catalytic materials as those mentioned above may also be used.

Negative electrode active materials for use in air cells are generally materials having a metal element capable of forming conductive ions. Examples of such a metal element include Li, Na, Zn, Fe, Al, Mg, Mn, Si, Ti, Cr, and V. In particular, Li is preferred because it can form cells with a high energy density. Examples of such active materials include not only elemental metals but also alloys, metal oxides, and metal nitrides. However, these are non-limiting examples, and other materials conventionally known in the art may also be used as negative electrode active materials.

### <Conduction supporting agent and other materials>

In the electrode mixture ink, the conduction supporting agent may be any type of carbon material having electrical conductivity. The conduction supporting agent may be the same as the conductive carbon material (A) described above.

In the electrode mixture ink, the binder is used to bind particles of the active material, the conductive carbon material, and other materials or to bind the conductive carbon material and the current collector together.

Examples of the binder for use in the electrode mixture ink include acrylic resins, polyurethane resins, polyester resins, phenolic resins, epoxy resins, phenoxy resins, urea resins, melamine resins, alkyd resins, formaldehyde resins, silicone resins, fluororesins, cellulose resins such as carboxymethyl cellulose, synthetic rubbers such as styrene-butadiene rubbers and fluororubbers, conductive resins such as polyaniline and polyacethylene, and fluorine atom-containing polymer compounds such as polyvinylidene fluoride, polyvinyl fluoride, and tetrafluoroethylene. Modifications, blends, or copolymers of these reins may also be used. These binders may be used alone or in combination of two or more.

When the electrode mixture ink is aqueous, the binder in the aqueous electrode mixture ink is preferably in a water medium. The binder in a water medium may be a water-soluble binder, an emulsion-type binder, a hydrosol-type binder, or the like, which may be selected as desired.

If necessary, the electrode mixture ink may further contain a film-formation supporting agent, an antifoaming agent, a leveling agent, an antiseptic, a pH adjuster, a viscosity modifier, or the like.

### <Methods for producing current collector and electrode>

An underlayer-bearing current collector can be obtained by applying the conductive composition to a current collector and then drying the conductive composition to form an underlayer on the current collector. An electrode for use in an electrical storage device can also be obtained by applying the conductive composition to a current collector, then drying the conductive composition to form an underlayer on the current collector, and then forming a composite layer on the underlayer. The electrode mixture ink described above may be used to form the composite layer on the underlayer.

### <Electrical storage device>

An electrical storage device such as a secondary cell or a capacitor can be obtained using the above electrode as at least one of positive and negative electrodes.

Examples of the secondary cell include lithium-ion secondary cells, sodium-ion secondary cells, magnesium-ion secondary cells, alkaline secondary cells, lead storage cells, sodium-sulfur secondary cells, lithium-air secondary cells, and the like, in which electrolytes, separators, and other components conventionally known for each type of secondary cell may be appropriately used.

Examples of the capacitor include electric double-layer capacitors and lithium-ion capacitors, in which electrolytes, separators, and other components conventionally known for each type of capacitor may be appropriately used.

### <Electrolyte>

The electrolyte will be described with reference to the case of a lithium-ion secondary cell as an example. The electrolyte may be a solution of a lithium-containing solid electrolyte in a non-aqueous solvent.

Examples of the solid electrolyte include, but are not limited to, LiBF₄, LiClO₄, LiPF₆, LiAsF₆, LiSbF₆, LiCF₃SO₃, Li(CF₃SO₂)₂N, LiC₄F₉SO₃, Li(CF₃SO₂)₃C, LiI, LiBr, LiCl, LiAlCl, LiHF₂, LiSCN, and LiBPh₄.

Examples of the non-aqueous solvent include, but are not limited to, carbonates such as ethylene carbonate, propylene carbonate, butylene carbonate, dimethyl carbonate, ethyl methyl carbonate, and diethyl carbonate; lactones such as γ-butyrolactone, γ-valerolactone, and γ-octanoic lactone; glymes such as tetrahydrofuran, 2-methyltetrahydrofuran, 1,3-dioxolane, 4-methyl-1,3-dioxolane, 1,2-methoxyethane, 1,2-ethoxyethane, and 1,2-dibutoxyethane; esters such as methyl formate, methyl acetate, and methyl propionate; sulfoxides such as dimethyl sulfoxide and sulfolane; and nitriles such as acetonitrile. These solvents may be used alone or in combination of two or more.

The electrolyte may also be contained in a polymer matrix, and the resulting gel may be used as a polyelectrolyte. Examples of the polymer matrix include, but are not limited to, acrylate resin having a polyalkylene oxide segment, polyphosphazen resin having a polyalkylene oxide segment, and polysiloxane having a polyalkylene oxide segment.

### <Separator>

Examples of the separator include, but are not limited to, a polyethylene nonwoven fabric, a polypropylene nonwoven fabric, a polyamide nonwoven fabric, and hydrophilic modifications thereof.

### <Cell structure and configuration>

The present invention provides no restriction on the structure of lithium ion secondary cells, electric double-layer capacitors, lithium-ion capacitors, and air secondary cells. In general, their structure includes positive and negative electrodes and optionally a separator. They may be in a variety of forms such as sheet forms, cylindrical forms, button forms, and laminate forms, depending on the intended use.

### Examples

Hereinafter, the present invention will be more specifically described with reference to examples, which, however, are not intended to limit the scope of the present invention at all. In the examples and the comparative examples, the term "parts" means "parts by weight" unless otherwise specified.

### <Preparation of aqueous dispersion of resin fine particles>

### [Synthesis Example 1]

Previously, a pre-emulsion was prepared by mixing 48.5 parts of methyl methacrylate, 50 parts of butyl acrylate, 1 part of acrylic acid, 0.5 parts of 3-methacryloxypropyltrimethoxysilane, 53 parts of ion-exchanged water, and 1.8 parts of ADEKA REASOAP SR-10 (manufactured by ADEKA CORPORATION) as a surfactant. A reaction vessel equipped with a stirrer, a thermometer, a dropping funnel, and a reflux condenser was charged with 40 parts of ion-exchanged water, 0.2 parts of ADEKA REASOAP SR-10 (manufactured by ADEKA CORPORATION) as a surfactant, and 1% by weight of the pre-emulsion. After the inside of the vessel was heated to 70°C and sufficiently purged with nitrogen, 10% of 10 parts of an aqueous solution of 5% potassium persulfate was added to the mixture to start polymerization. After the reaction system was kept at 70°C for 5 minutes, the remaining part of the pre-emulsion and the remaining part of the aqueous solution of 5% potassium persulfate were added dropwise to the mixture over 3 hours with the system being kept at 70°C and then further stirred continuously for 2 hours. After solid content measurement was performed to check that a conversion ratio of more than 98% was achieved, the reaction mixture was cooled to a temperature of 30°C. After 25% ammonia water was added to adjust the pH of the reaction mixture to 8.5, the solid content of the reaction mixture was adjusted with ion-exchanged water to 40%, so that an aqueous dispersion of resin fine particles was obtained. The solid content was determined from the amount of the residue obtained after baking at 150°C for 20 minutes.

### <Production of compound (E) (production of epoxy group-containing compound)>

### [Production Example 1]

A reaction vessel equipped with a stirrer, a thermometer, a dropping funnel, and a reflux condenser was charged with 20 parts of isopropyl alcohol and 20 parts of water. Separately, 40 parts of methyl methacrylate, 40 parts of methyl acrylate, and 20 parts of glycidyl methacrylate were added to a first dropping chamber, and a solution of 2 parts of potassium persulfate in 30 parts of isopropyl alcohol and 30 parts of water was added to a second dropping chamber. After the inside of the vessel was heated to 80°C and sufficiently purged with nitrogen, the materials were added dropwise to the vessel from the first and second dropping chambers, respectively, over 2 hours, so that polymerization was performed. After the dropwise addition was completed, the reaction mixture was continuously stirred for 1 hour with the inner temperature being kept at 80°C. After solid content measurement was performed to check that a conversion ratio of more than 98% was achieved, the reaction mixture was cooled to a temperature of 30°C to give an epoxy group-containing compound (methyl methacrylate-methyl acrylate-glycidyl methacrylate copolymer) solution with a solid content of 40%. The solid content was determined from the amount of the residue obtained after baking at 150°C for 20 minutes.

### <Production of compound (E) (production of amide group-containing compound)>

### [Production Example 2]

A reaction vessel equipped with a stirrer, a thermometer, a dropping funnel, and a reflux condenser was charged with 90 parts of water. Separately, 20 parts of acrylamide was added to a first dropping chamber, and a solution of 2 parts of potassium persulfate in 90 parts of water was added to a second dropping chamber. After the inside of the vessel was heated to 80°C and sufficiently purged with nitrogen, the materials were added dropwise to the vessel from the first and second dropping chambers, respectively, over 2 hours, so that polymerization was performed. After the dropwise addition was completed, the reaction mixture was continuously stirred for 1 hour with the inner temperature being kept at 80°C. After solid content measurement was performed to check that a conversion ratio of more than 98% was achieved, the reaction mixture was cooled to a temperature of 30°C to give an amide group-containing compound (polyacrylamide) solution with a solid content of 40%. The solid content was determined from the amount of the residue obtained after baking at 150°C for 20 minutes.

### [Production Example 3]

A reaction vessel equipped with a stirrer, a thermometer, a dropping funnel, and a reflux condenser was charged with 40 parts of water. Separately, 40 parts of 2-ethylhexyl acrylate, 40 parts of styrene, and 20 parts of dimethylacrylamide were added to a first dropping chamber, and a solution of 2 parts of potassium persulfate in 60 parts of water was added to a second dropping funnel. After the inside of the vessel was heated to 80°C and sufficiently purged with nitrogen, the materials were added dropwise to the vessel from the first and second dropping chambers, respectively, over 2 hours, so that polymerization was performed. After the dropwise addition was completed, the reaction mixture was continuously stirred for 1 hour with the inner temperature being kept at 80°C. After solid content measurement was performed to check that a conversion ratio of more than 98% was achieved, the reaction mixture was cooled to a temperature of 30°C to give an amide group-containing compound (2-ethylhexyl acrylate-styrene-dimethylacrylamide copolymer) solution with a solid content of 40%. The solid content was determined from the amount of the residue obtained after baking at 150°C for 20 minutes.

### <Production of compound (E) (production of hydroxyl group-containing compound)>

### [Production Example 4]

A reaction vessel equipped with a stirrer, a thermometer, a dropping funnel, and a reflux condenser was charged with 20 parts of isopropyl alcohol and 20 parts of water. Separately, 40 parts of methyl methacrylate, 40 parts of butyl acrylate, and 20 parts of 2-hydroxyethyl methacrylate were added to a first dropping chamber, and a solution of 2 parts of potassium persulfate in 30 parts of isopropyl alcohol and 30 parts of water was added to a second dropping chamber. After the inside of the vessel was heated to 80°C and sufficiently purged with nitrogen, the materials were added dropwise to the vessel from the first and second dropping chambers, respectively, over 2 hours, so that polymerization was performed. After the dropwise addition was completed, the reaction mixture was continuously stirred for 1 hour with the inner temperature being kept at 80°C. After solid content measurement was performed to check that a conversion ratio of more than 98% was achieved, the reaction mixture was cooled to a temperature of 30°C to give a hydroxyl group-containing compound (methyl methacrylate-butyl acrylate-2-hydroxyethyl methacrylate copolymer) solution with a solid content of 40%. The solid content was determined from the amount of the residue obtained after baking at 150°C for 20 minutes.

### [Synthesis Examples 2 to 21]

According to the formulations shown in Tables 1 and 3, aqueous dispersions of resin fine particles of Synthesis Examples 2 to 10 and 18 to 21 were obtained by the same process as in Synthesis Example 1. The aqueous dispersions of resin fine particles in Table 2 were each obtained by mixing the compound (E) with the aqueous dispersion of resin fine particles shown as a base in Table 2. In Tables 1 to 3, the values are parts by weight. In Synthesis Examples 20 and 21, aggregation of resin occurred during the emulsion polymerization and made it impossible to obtain the desired resin fine particles.

**[Table 1]**

| Synthesis Example | Monomer group (C1) | | Monomer group (C2) | | | | | | | | | | | | Surfactant | | Polymerization initiator |
|---|---|---|---|---|---|---|---|---|---|---|---|---|---|---|---|---|---|
| | | | Monomer (c3) | | | | | | | | | | | | | | |
| | Monomer (c1) | Monomer (c2) | Monomer (c4) | Monomer (c5) | | Monomer (c6) | Monomer (c7) | | | | | | | | | | |
| | | | | | | | Monomer (c8) | | Monomer (c9) | | Other | | | | | | |
| | 3-methacryloxypropyl trimethoxysilane | Ally methacrylate | Glycidyl methacrylate | Acrylamide | N-methylolacrylamide | Hydroxyethyl methacrylate | 2-ethylhexyl acrylate | Lauryl methacrylate | Styrene | Cyclohexyl methacrylate | Acrylic acid | Styrenesulfonic acid | Methyl methacrylate | Butyl acrylate | ADEKA REASOAP SR-10 | ADEKA REASOAP ER-20 | 5% Aqueous solution of potassium persulfate |
| Synthesis Example 1 | 0.5 | | | | | | | | | | 1 | | 48.5 | 50 | 2 | | 10 |
| Synthesis Example 2 | | 3 | | | | | | | | | 1 | | 46 | 50 | 2 | | 10 |
| Synthesis Example 3 | 1 | | | | | 15 | | | | | | | 34 | 50 | 1 | 1 | 10 |
| Synthesis Example 4 | | 1.5 | 10 | 2.5 | 5.5 | | | | | | 0.5 | | 30 | 50 | 2 | | 10 |
| Synthesis Example 5 | 0.5 | | | 1.5 | | | | | | | | 1 | 40 | 57 | 2 | | 10 |
| Synthesis Example 6 | 1.5 | | | | 3 | | | | | | 4 | | 31.5 | 60 | | 3 | 10 |
| Synthesis Example 7 | 0.5 | | | 1.5 | | | | | 50 | | 1 | | 7 | 40 | 2 | | 10 |
| Synthesis Example 8 | 0.5 | | | 1.5 | | | 40 | | 50 | | 1 | | 7 | | 2 | | 10 |
| Synthesis Example 9 | | 3 | 5 | | | | | 30 | 30 | | | 2 | 10 | 20 | 2 | | 10 |
| Synthesis Example 10 | 1 | | | | | 3 | 35 | | 30 | 20 | 1 | | | 10 | 2 | | 10 |

**[Table 2]**

| Synthesis Example | Aqueous dispersion of resin fine particles as a base | | Compound (E) | | | | | | | |
|---|---|---|---|---|---|---|---|---|---|---|
| | Synthesis Example No. | Parts by weight | Uncrosslinked epoxy group-containing compound | | Uncrosslinked amide group-containing compound | | Uncrosslinked hydroxyl group-containing compound | | Uncrosslinked oxazoline group-containing compound | |
| | | | Epoxy resin | Compound obtained in Production Example 1 | Compound obtained in Production Example 2 | Compound obtained in Production Example 3 | Compound obtained in Production Example 4 | 1,4-bis(hydroxymethyl)c yclohexane | Oxazoline group-containing acrylic styrene resin | 2'-p-phenylenebis(2-oxazoline) |
| Synthesis Example 11 | 8 | 100 | 15 | | | | | | | |
| Synthesis Example 12 | 2 | 100 | | 30 | | | 5 | | | |
| Synthesis Example 13 | 4 | 100 | | | 15 | | | | | |
| Synthesis Example 14 | 7 | 100 | | | | 26 | | | | |
| Synthesis Example 15 | 5 | 100 | 15 | | | | 25 | | | |
| Synthesis Example 16 | 8 | 100 | | | | | | 15 | 30 | |
| Synthesis Example 17 | 9 | 100 | | | 5 | | | | | 5 |

**[Table 3]**

| Synthesis Example | Monomer group (C1) | | Monomer group (C2) | | | | | | | | | | | | Surfactant | | Polymerization initiator |
|---|---|---|---|---|---|---|---|---|---|---|---|---|---|---|---|---|---|
| | | | Monomer (c3) | | | | | | | | | | | | | | |
| | Monomer (c1) | Monomer (c2) | Monomer (c4) | Monomer (c5) | | Monomer (c6) | Monomer (c7) | | | | | | | | | | |
| | | | | | | | Monomer (c8) | | Monomer (c9) | | Other | | | | | | |
| | 3-methacryloxypropyltrimet hoxysilane | Ally methacrylate | Glycidyl methacrylate | Acrylamide | N-methylolacrylamide | Hydroxyethyl methacrylate | 2-ethylhexyl acrylate | Lauryl methacrylate | Styrene | Cyclohexyl methacrylate | Acrylic acid | Styrenesulfonic acid | Methyl methacry late | Butyl acrylate | ADEKA REASOAP SR-10 | ADEKA REASOAP ER-20 | 5% Aqueous solution of potassium persulfate |
| Synthesis Example 18 | | | | | | | 45 | | 50 | | | | 5 | | 2 | | 10 |
| Synthesis Example 19 | | | | 5 | | | 42 | | 50 | | 1 | | 2 | | 2 | | 10 |
| Synthesis Example 20 | | 10 | | | | 2 | 40 | | 45 | | 1 | | 2 | | 2 | | 10 |
| Synthesis Example 21 | 0.5 | | 30 | | | | 30 | | 35 | | 1 | | 3.5 | | 2 | | 10 |

The products with the names in Tables 1 to 3 will be described below.
ADEKA REASOAP SR-10: Alkyl ether anionic surfactant (manufactured by ADEKA CORPORATION)
ADEKA REASOAP ER-20: Alkyl ether nonionic surfactant (manufactured by ADEKA CORPORATION)
Epoxy resin: ADEKA RESIN EM-1-60L (product name) manufactured by ADEKA CORPORATION (bisphenol A-epichlorohydrin epoxy resin, 320 in epoxy equivalent)
Oxazoline-containing acrylic styrene resin: EPOCROS K-2020 E (product name) manufactured by NIPPON SHOKUBAI CO., LTD., 550 in oxazoline equivalent

### <Conductive compositions>

### (Example 1)

A conductive composition (1) was obtained by adding 10 parts of acetylene black (DENKA BLACK HS-100) (A-1) as a conductive carbon material, 7 parts (1.4 parts on a solid basis) of a 20% polyallylamine aqueous solution (B-1) as a water-soluble resin binder, 31 parts (18.6 parts on a solid basis) of Polytetrafluoroethylene 30-J (manufactured by Du Pont-Mitsui Fluorochemicals Company, Ltd., a 60% aqueous dispersion) (C-1) as a water-dispersed resin fine particle binder, and 102 parts of water to a mixer, mixing them in the mixer, transferring the mixture into a sand mill, and subjecting the mixture to dispersion in the sand mill. The dispersity of the resulting dispersion was determined by the grind gauge test (according to JIS K 5600-2-5). Table 4 shows the evaluation results. In the table, the number indicates the size of coarse particles. As the number is smaller, the dispersibility is higher, and the particles are more uniform and in a better state.

### (Examples 2 to 9 and Comparative Examples 1 to 6)

According to the proportion shown in Table 4, each of conductive compositions (2) to (15) of the examples and the comparative examples was obtained by the same process as that for the conductive composition (1).

**[Table 4]**

| | Conductive composition | Conductive carbon material (A) | | Water-soluble resin binder (B) | | | Water-dispersed resin fine particle binder (C) | | | Water | Conductive carbon material (A) content (*1) | Water-soluble rein binder (B) content (*2) | Grind gauge (µm) |
|---|---|---|---|---|---|---|---|---|---|---|---|---|---|
| | | Type | Added amount (parts by weight) | Type | Added amount (parts by weight) | Solid weight | Type | Added amount (parts by weight) | Solid weight | Added amount (parts by weight) | | | |
| Example 1 | (1) | A-1 | 10 | B-1 | 7 | 1.4 | C-1 | 31 | 18.6 | 102 | 33% | 7% | 35 |
| Example 2 | (2) | A-1 | 10 | B-2 | 1.4 | 1.4 | C-1 | 31 | 18.6 | 108 | 33% | 7% | 35 |
| Example 3 | (3) | A-1 | 10 | B-2 | 1.4 | 1.4 | Synthesis Example 1 | 46.5 | 18.6 | 92 | 33% | 7% | 30 |
| Example 4 | (4) | A-1 | 10 | B-2 | 1.4 | 1.4 | C-2 | 62 | 18.6 | 77 | 33% | 7% | 30 |
| Example 5 | (5) | A-1 | 10 | B-2 | 1.4 | 1.4 | C-3 | 37.2 | 18.6 | 92.1 | 33% | 7% | 40 |
| Example 6 | (6) | A-1 | 10 | B-2 | 0.6 | 0.6 | C-1 | 32.4 | 19.4 | 107 | 33% | 3% | 35 |
| Example 7 | (7) | A-2 | 10 | B-3 | 7.8 | 7.8 | Synthesis Example 11 | 30.5 | 12.2 | 102 | 33% | 39% | 40 |
| Example 8 | (8) | A-3 | 10 | B-2 | 0.9 | 0.9 | C-2 | 13.65 | 4.1 | 48.5 | 67% | 18% | 40 |
| Example 9 | (9) | A-3 | 10 | B-4 | 6 | 1.2 | C-2 | 129.4 | 38.8 | 88 | 20% | 3% | 35 |
| Comparative Example 1 | (10) | A-1 | 10 | - | 0 | 0 | C-1 | 33.4 | 20.1 | 107 | 33% | 0% | >100 |
| Comparative Example 2 | (11) | A-2 | 10 | B-2 | 20 | 20 | - | 0 | 0 | 120 | 33% | 100% | 80 |
| Comparative Example 3 | (12) | A-3 | 10 | B-2 | 10 | 10 | C-2 | 33.4 | 10 | 97 | 33% | 50% | 75 |
| Comparative Example 4 | (13) | A-3 | 10 | B-2 | 0.08 | 0.08 | C-2 | 8.09 | 2.43 | 44 | 80% | 3% | 90 |
| Comparative Example 5 | (14) | A-3 | 10 | B-4 | 13.3 | 2.67 | C-2 | 291.2 | 87.4 | 185 | 10% | 3% | 80 |
| Comparative Example 6 | (15) | A-3 | 10 | B-4 | 5 | 1 | C-1 | 4 | 2.4 | 81 | 75% | 29% | 65 |

| | | | | | | | | | | | | | |
|---|---|---|---|---|---|---|---|---|---|---|---|---|---|
| (*1) The content based on 100% by weight of the total solids in (A), (B), and (C) (2*) The content based on 100% by weight of the total solids in (B) and (C) | | | | | | | | | | | | | |

The materials used in the examples are shown below.

### <Conductive carbon material (A)>

A-1: DENKA BLACK HS-100 (manufactured by DENKI KAGAKU KOGYO KABUSHIKI KAISHA)
A-2: Mitsubishi Carbon #3050B (manufactured by Mitsubishi Chemical Corporation)
A-3: DENKA BLACK GRANULE (manufactured by DENKI KAGAKU KOGYO KABUSHIKI KAISHA)

### <Water-soluble resin binder (B)>

B-1: Polyallylamine PAA-05 (20% aqueous solution) (manufactured by Nitto Boseki Co., Ltd.)
B-2: Carboxymethyl cellulose (manufactured by Wako Pure Chemical Industries, Ltd.)
B-3: Polyacrylic acid (manufactured by Wako Pure Chemical Industries, Ltd., 5,000 in average molecular weight)
B-4: Styrene acrylic copolymer (a 20% aqueous solution of a 75% styrene-25% acrylic acid copolymer)

### <Water-dispersed resin fine particle binder (C)>

C-1: Polytetrafluoroethylene 30-J (an aqueous dispersion with a solid content of 60%, manufactured by Du Pont-Mitsui Fluorochemicals Company, Ltd.)
C-2: Urethane Emulsion Disco Pearl U-53 (an aqueous dispersion with a solid content of 30%, manufactured by Sumika Bayer Urethane Co., Ltd.)
C-3: Styrene-Butadiene Emulsion TED-2001 (an aqueous dispersion with a solid content of 50%, manufactured by JSR Corporation)

### [Example A-1]

The conductive composition (1) was then applied with a bar coater to a 20-µm-thick aluminum foil as a current collector. Subsequently, the composition (1) was dried by heating to form a 1.2-µm-thick coating, so that an underlayer-bearing current collector (1) for use in an electrical storage device was obtained. The resulting underlayer-bearing current collector was evaluated for water resistance by the method below.

### [Examples A-2 to A-9, B-1 to B-9, C-1 to C-6, and E-1 to E-9 and Comparative Examples C-1 to C-6, D-1 to D-6, and E-10 and E-15]

Using the components shown in Table 5, each of underlayer-bearing current collectors (2) to (45) for use in an electrical storage device was obtained by the same process as that for the underlayer-bearing current collector (1) and then evaluated in the same way.

### (Water resistance of underlayer-bearing current collector)

The surface of each of the prepared underlayer-bearing current collectors was rubbed with a cotton fabric impregnated with water when they were evaluated for water resistance. Water resistance is important in order for the underlayer not to collapse during the application of an aqueous electrode mixture ink to the underlayer. The evaluation criteria are shown below, and the results are shown in Table 5.
○: No abrasion is observed (practically acceptable level) .
○Δ: It is observed that the underlayer is slightly abraded and deposited on the cotton fabric, but the surface of the current collector is not exposed (insufficient but workable level)
Δ: The underlayer is abraded, and the surface of the current collector is partially exposed.
×: The underlayer is completely abraded away.

**[Table 5]**

| | Underlayer-bearing current collector | Conductive composition | Current collector | Water resistance |
|---|---|---|---|---|
| Example A-1 | (1) | (1) | Aluminum foil | ○ |
| Example A-2 | (2) | (2) | Aluminum foil | ○ |
| Example A-3 | (3) | (3) | Aluminum foil | ○ |
| Example A-4 | (4) | (4) | Aluminum foil | ○ |
| Example A-5 | (5) | (5) | Aluminum foil | ○Δ |
| Example A-6 | (6) | (6) | Aluminum foil | ○ |
| Example A-7 | (7) | (7) | Aluminum foil | ○Δ |
| Example A-8 | (8) | (8) | Aluminum foil | ○Δ |
| Example A-9 | (9) | (9) | Aluminum foil | ○ |
| Example B-1 | (10) | (1) | Copper foil | ○ |
| Example B-2 | (11) | (2) | Copper foil | ○ |
| Example B-3 | (12) | (3) | Copper foil | ○ |
| Example B-4 | (13) | (4) | Copper foil | ○ |
| Example B-5 | (14) | (5) | Copper foil | ○Δ |
| Example B-6 | (15) | (6) | Copper foil | ○ |
| Example B-7 | (16) | (7) | Copper foil | ○Δ |
| Example B-8 | (17) | (8) | Copper foil | ○Δ |
| Example B-9 | (18) | (9) | Copper foil | ○ |
| Comparative Example C-1 | (19) | (10) | Aluminum foil | Δ |
| Comparative Example C-2 | (20) | (11) | Aluminum foil | × |
| Comparative Example C-3 | (21) | (12) | Aluminum foil | × |
| Comparative Example C-4 | (22) | (13) | Aluminum foil | Δ |
| Comparative Example C-5 | (23) | (14) | Aluminum foil | × |
| Comparative Example C-6 | (24) | (15) | Aluminum foil | Δ |
| Comparative Example D-1 | (25) | (10) | Copper foil | Δ |
| Comparative Example D-2 | (26) | (11) | Copper foil | × |
| Comparative Example D-3 | (27) | (12) | Copper foil | × |
| Comparative Example D-4 | (28) | (13) | Copper foil | Δ |
| Comparative Example D-5 | (29) | (14) | Copper foil | × |
| Comparative Example D-6 | (30) | (15) | Copper foil | Δ |
| Example E-1 | (31) | (1) | Aluminum punching metal | ○ |
| Example E-2 | (32) | (2) | Aluminum punching metal | ○ |
| Example E-3 | (33) | (3) | Aluminum punching metal | ○ |
| Example E-4 | (34) | (4) | Aluminum punching metal | ○ |
| Example E-5 | (35) | (5) | Aluminum punching metal | ○Δ |
| Example E-6 | (36) | (6) | Aluminum punching metal | ○ |
| Example E-7 | (37) | (7) | Aluminum punching metal | ○Δ |
| Example E-8 | (38) | (8) | Aluminum punching metal | ○Δ |
| Example E-9 | (39) | (9) | Aluminum punching metal | ○ |
| Comparative Example E-10 | (40) | (10) | Aluminum punching metal | Δ |
| Comparative Example E-11 | (41) | (11) | Aluminum punching metal | × |
| Comparative Example E-12 | (42) | (12) | Aluminum punching metal | × |
| Comparative Example E-13 | (43) | (13) | Aluminum punching metal | Δ |
| Comparative Example E-14 | (44) | (14) | Aluminum punching metal | × |
| Comparative Example E-15 | (45) | (15) | Aluminum punching metal | Δ |

### <Electrode mixture ink for lithium-ion secondary cell positive electrode>

An electrode mixture ink for a positive electrode was prepared by mixing 45 parts of LiFePO₄ as a positive electrode active material, 2.5 parts of a conduction supporting agent (acetylene black (DENKA BLACK HS-100 manufactured by DENKI KAGAKU KOGYO KABUSHIKI KAISHA)), and 3 parts of carboxymethyl cellulose (manufactured by Wako Pure Chemical Industries, Ltd.) and further mixing them with 47 parts of water and 2.5 parts (1.5 parts on a solid basis) of a binder (Polytetrafluoroethylene 30-J manufactured by Du Pont-Mitsui Fluorochemicals Company, Ltd. (a 60% aqueous dispersion)).

### <Electrode mixture ink for lithium-ion secondary cell negative electrode>

An electrode mixture ink for a secondary cell negative electrode was obtained by mixing 48 parts of artificial graphite as a negative electrode active material and 25 parts (0.5 parts on a solid basis) of an aqueous solution of 2% by weight hydroxyethyl cellulose (manufactured by Wako Pure Chemical Industries, Ltd.) in a mixer and mixing them with 23.3 parts of water and 3.75 parts (1.5 parts on a solid basis) of a binder (an aqueous dispersion of 40% styrene-butadiene latex (SBR)).

### <Underlayer-less positive electrode for lithium-ion secondary cell (Comparative Example 7 and reference counter electrode)>

The electrode mixture ink for a lithium-ion secondary cell positive electrode was applied with a doctor blade to a 20-µm-thick aluminum foil as a current collector. The composition was then dried by heating under reduced pressure, which was so controlled that a 100-µm-thick electrode could be formed. The product was then rolled with a roll press to form an 85-µm-thick positive electrode. The electrode of Comparative Example 7 was evaluated for adhesion by the method below. Table 6 shows the results of the evaluation.

### <Underlayer-bearing positive electrode for lithium-ion secondary cell>

### [Example 10]

The electrode mixture ink for a lithium-ion secondary cell positive electrode was applied with a doctor blade to the underlayer-bearing current collector (1) for a secondary cell. The composition was then dried by heating under reduced pressure, which was so controlled that a 100-µm-thick electrode could be formed. The product was then rolled with a roll press to form an 85-µm-thick positive electrode. The resulting electrode was evaluated for adhesion by the method below. Table 6 shows the results of the evaluation.

### [Examples 11 to 18 and Comparative Examples 8 to 13]

Positive electrodes were each obtained in the same way as in Example 10, except that the underlayer-bearing electrode shown in Table 6 for an electrical storage device was used instead, and then evaluated in the same way as in Example 10. Table 6 shows the results of the evaluation.

### <Underlayer-less negative electrode for lithium-ion secondary cell (Comparative Example 14 and reference counter electrode)>

The electrode mixture ink for a lithium-ion secondary cell negative electrode was applied with a doctor blade to a 20-µm-thick copper foil as a current collector. The composition was then dried by heating under reduced pressure, which was so controlled that an 82-µm-thick electrode could be formed. The product was then rolled with a roll press to form a 70-µm-thick negative electrode. The electrode of Comparative Example 14 was evaluated for adhesion by the method below. Table 7 shows the results of the evaluation.

### <Underlayer-bearing negative electrode for lithium-ion secondary cell>

### [Example 19]

The electrode mixture ink for a lithium-ion secondary cell negative electrode was applied with a doctor blade to the underlayer-bearing current collector (10) for an electrical storage device. The composition was then dried by heating under reduced pressure, which was so controlled that an 82-µm-thick electrode could be formed. The product was then rolled with a roll press to form a 70-µm-thick negative electrode. The resulting electrode was evaluated for adhesion by the method below. Table 7 shows the results of the evaluation.

### [Examples 20 to 27 and Comparative Examples 15 to 20]

Negative electrodes were each obtained in the same way as in Example 19, except that the underlayer-bearing current collector shown in Table 7 for an electrical storage device was used instead, and then evaluated in the same way as in Example 19. Table 7 shows the results of the evaluation.

### (Adhesion between electrode components)

A lattice pattern with six cuts in each direction at intervals of 2 mm was made in each prepared electrode, in which each cut was made with a depth from the surface of the electrode to the current collector using a knife. A pressure-sensitive adhesive tape was attached to the cuts and then immediately peeled off when visual evaluation was performed to determine whether and how the electrode disintegrated. The evaluation criteria are shown below.
○: Nothing peels off (practically acceptable level).
○Δ: Only a small part peels off (insufficient but workable level).
Δ: About half peels off.
×: Almost the whole peels off.

### <Coin-shaped lithium-ion secondary cell>

A 16-mm-diameter piece was punched from each of the positive electrode shown in Table 6 and the negative electrode shown in Table 7. A coin-shaped cell was formed, including the resulting electrode pieces, a separator (porous polypropylene film) between the electrode pieces, and an electrolyte (a non-aqueous electrolyte obtained by dissolving 1 M of LiPF₆ in a mixed solvent of ethylene carbonate and diethyl carbonate in a ratio of 1 : 1 (by volume)). The coin-shaped cell was formed in an argon gas filled glove box. After prepared, the coin-shaped cell was subjected to the prescribed cell characteristic evaluation. Tables 6 and 7 show the results of the evaluation.

### (Charge-discharge cycle characteristics)

The resulting coin-shaped cells were subjected to charge-discharge measurement using a charge-discharge system (SM-8 manufactured by HOKUTO DENKO CORPORATION).

Constant current/constant voltage charge (cut-off current 0.1 mA) was performed at a charge current of 1.0 mA (0.2 C) until a charge end voltage of 4.0 V was reached. Subsequently, constant current discharge was performed at a discharge current of 1.0 mA until a discharge end voltage of 2.0 V was reached. This charge-discharge process was performed as one cycle, and 5 cycles of this process were performed. The initial discharge capacity was defined as the discharge capacity at the fifth cycle (the initial discharge capacity was normalized as a retention of 100%).

Next, constant current/constant voltage charge (cut-off current 0.5 mA) was performed at a charge current of 5.0 mA in a 50°C thermostatic chamber until a charge end voltage of 4.0 V was reached. Subsequently, constant current discharge was performed at a discharge current of 5.0 mA until a discharge end voltage of 2.0 V was reached. After 200 cycles of the charge-discharge process was performed, the rate of change in the discharge capacity retention (the percentage of the discharge capacity at the 200th cycle to the initial discharge capacity) was calculated (the closer to 100% the better).
○: The rate of change is at least 90% (excellent).
○Δ: The rate of change is from 85% to less than 90% (absolutely acceptable).
Δ: The rate of change is from 80% to less than 85% (insufficient but workable level).
×: The rate of change is less than 80% (practically unacceptable or not workable).

### [Table 6]

**Table 6: Lithium-ion secondary cells**

| | | | Adhesion | Counter electrode | Charge-discharge cycle characteristics |
|---|---|---|---|---|---|
| Example 10 | Electrode mixture ink | For positive electrode | ○ | Underlayer-less negative electrode | ○ |
| | Underlayer-bearing current collector | (1) | | | |
| Example 11 | Electrode mixture ink | For positive electrode | ○ | Underlayer-less negative electrode | ○ |
| | Underlayer-bearing current collector | (2) | | | |
| Example 12 | Electrode mixture ink | For positive electrode | ○ | Underlayer-less negative electrode | ○ |
| | Underlayer-bearing current collector | (3) | | | |
| Example 13 | Electrode mixture ink | For positive electrode | ○ | Underlayer-less negative electrode | ○ |
| | Underlayer-bearing current collector | (4) | | | |
| Example 14 | Electrode mixture ink | For positive electrode | ○Δ | Underlayer-less negative electrode | ○ |
| | Underlayer-bearing current collector | (5) | | | |
| Example 15 | Electrode mixture ink | For positive electrode | ○ | Underlayer-less negative electrode | ○ |
| | Underlayer-bearing current collector | (6) | | | |
| Example 16 | Electrode mixture ink | For positive electrode | ○Δ | Underlayer-less negative electrode | ○Δ |
| | Underlayer-bearing current collector | (7) | | | |
| Example 17 | Electrode mixture ink | For positive electrode | ○Δ | Underlayer-less negative electrode | ○Δ |
| | Underlayer-bearing current collector | (8) | | | |
| Example 18 | Electrode mixture ink | For positive electrode | ○Δ | Underlayer-less negative electrode | ○ |
| | Underlayer-bearing current collector | (9) | | | |
| Comparative Example 7 | Electrode mixture ink | For positive electrode | × | Underlayer-less negative electrode | × |
| | Underlayer-bearing current collector | Absent | | | |
| Comparative Example 8 | Electrode mixture ink | For positive electrode | × | Underlayer-less negative electrode | × |
| | Underlayer-bearing current collector | (19) | | | |
| Comparative Example 9 | Electrode mixture ink | For positive electrode | × | Underlayer-less negative electrode | × |
| | Underlayer-bearing current collector | (20) | | | |
| Comparative Example 10 | Electrode mixture ink | For positive electrode | × | Underlayer-less negative electrode | × |
| | Underlayer-bearing current collector | (21) | | | |
| Comparative Example 11 | Electrode mixture ink | For positive electrode | × | Underlayer-less negative electrode | × |
| | Underlayer-bearing current collector | (22) | | | |
| Comparative Example 12 | Electrode mixture ink | For positive electrode | Δ | Underlayer-less negative electrode | Δ |
| | Underlayer-bearing current collector | (23) | | | |
| Comparative Example 13 | Electrode mixture ink | For positive electrode | Δ | Underlayer-less negative electrode | Δ |
| | Underlayer-bearing current collector | (24) | | | |

### [Table 7]

**Table 7: Lithium-ion secondary cells**

| | | | Adhesion | Counter electrode | Charge-discharge cycle characteristics |
|---|---|---|---|---|---|
| Example 19 | Electrode mixture ink | For negative electrode | ○Δ | Underlayer-less positive electrode | ○ |
| | Underlayer-bearing current collector | (10) | | | |
| Example 20 | Electrode mixture ink | For negative electrode | ○ | Underlayer-less positive electrode | ○ |
| | Underlayer-bearing current collector | (11) | | | |
| Example 21 | Electrode mixture ink | For negative electrode | ○ | Underlayer-less positive electrode | ○ |
| | Underlayer-bearing current collector | (12) | | | |
| Example 22 | Electrode mixture ink | For negative electrode | ○ | Underlayer-less positive electrode | ○ |
| | Underlayer-bearing current collector | (13) | | | |
| Example 23 | Electrode mixture ink | For negative electrode | ○Δ | Underlayer-less positive electrode | ○Δ |
| | Underlayer-bearing current collector | (14) | | | |
| Example 24 | Electrode mixture ink | For negative electrode | ○ | Underlayer-less positive electrode | ○ |
| | Underlayer-bearing current collector | (15) | | | |
| Example 25 | Electrode mixture ink | For negative electrode | ○Δ | Underlayer-less positive electrode | ○Δ |
| | Underlayer-bearing current collector | (16) | | | |
| Example 26 | Electrode mixture ink | For negative electrode | ○Δ | Underlayer-less positive electrode | ○Δ |
| | Underlayer-bearing current collector | (17) | | | |
| Example 27 | Electrode mixture ink | For negative electrode | ○Δ | Underlayer-less positive electrode | ○Δ |
| | Underlayer-bearing current collector | (18) | | | |
| Comparative Example 14 | Electrode mixture ink | For negative electrode | Δ | Underlayer-less positive electrode | Δ |
| | Underlayer-bearing current collector | Absent | | | |
| Comparative Example 15 | Electrode mixture ink | For negative electrode | Δ | Underlayer-less positive electrode | × |
| | Underlayer-bearing current collector | (25) | | | |
| Comparative Example 16 | Electrode mixture ink | For negative electrode | × | Underlayer-less positive electrode | × |
| | Underlayer-bearing current collector | (26) | | | |
| Comparative Example 17 | Electrode mixture ink | For negative electrode | × | Underlayer-less positive electrode | × |
| | Underlayer-bearing current collector | (27) | | | |
| Comparative Example 18 | Electrode mixture ink | For negative electrode | Δ | Underlayer-less positive electrode | Δ |
| | Underlayer-bearing current collector | (28) | | | |
| Comparative Example 19 | Electrode mixture ink | For negative electrode | Δ | Underlayer-less positive electrode | × |
| | Underlayer-bearing current collector | (29) | | | |
| Comparative Example 20 | Electrode mixture ink | For negative electrode | Δ | Underlayer-less positive electrode | Δ |
| | Underlayer-bearing current collector | (30) | | | |

### <Electrode mixture ink for electric double-layer capacitor positive and negative electrodes>

An electrode mixture ink for positive and negative electrodes was prepared by mixing 85 parts of activated carbon (specific surface area 1,800 m²/g) as an active material, 5 parts of a conduction supporting agent (acetylene black (DENKA BLACK HS-100 manufactured by DENKI KAGAKU KOGYO KABUSHIKI KAISHA)), 8 parts of carboxymethyl cellulose (manufactured by Wako Pure Chemical Industries, Ltd.), 3.3 parts (2 parts on a solid basis) of a binder (Polytetrafluoroethylene 30-J manufactured by Du Pont-Mitsui Fluorochemicals Company, Ltd. (a 60% aqueous dispersion)), and 220 parts of water.

### <Underlayer-less positive and negative electrodes for electric double-layer capacitor (Comparative Examples 21 and 28 and reference counter electrode)>

The electrode mixture ink for an electric double-layer capacitor was applied with a doctor blade to a 20-µm-thick aluminum foil as a current collector. Subsequently, after the electrode mixture ink was dried by heating under reduced pressure, the product was rolled with a roll press, so that a 50-µm-thick positive electrode and a 50-µm-thick negative electrode were obtained, respectively. The electrodes of Comparative Examples 21 and 28 were each evaluated for adhesion by the above method. Tables 8 and 9 show the results of the evaluation, respectively.

### <Underlayer-bearing positive and negative electrodes for electric double-layer capacitor>

### [Example 28]

The electrode mixture ink for an electric double-layer capacitor was applied with a doctor blade to the underlayer-bearing current collector (1) for an electrical storage device. Subsequently, after the electrode mixture ink was dried by heating under reduced pressure, the product was rolled with a roll press, so that a 50-µm-thick positive electrode and a 50-µm-thick negative electrode were obtained, respectively. The resulting electrodes were each evaluated for adhesion by the above method. Table 8 shows the results of the evaluation.

### [Examples 29 to 45 and Comparative Examples 22 to 27 and 29 to 34]

Positive and negative electrodes were obtained in the same way as in Example 28, except that the underlayer-bearing electrode shown in Table 8 or 9 for an electrical storage device was used instead. Tables 8 and 9 also show the results of the evaluation of the adhesion.

### <Electric double-layer capacitor>

A 16-mm-diameter piece was punched from each of the positive electrode shown in Table 8 and the negative electrode shown in Table 9. An electric double-layer capacitor was formed, including the resulting electrode pieces, a separator (porous polypropylene film) between the electrode pieces, and an electrolyte (a non-aqueous electrolyte obtained by dissolving 1 M of TEMABF₄ (triethylmethylammonium tetrafluoroborate) in a solvent of propylene carbonate). The electric double-layer capacitor was formed in an argon gas filled glove box. After prepared, the electric double-layer capacitor was subjected to the prescribed electric characteristic evaluation. Tables 8 and 9 show the results of the evaluation.

### (Charge-discharge cycle characteristics)

The resulting electric double-layer capacitors were subjected to charge-discharge measurement using a charge-discharge system.

Charge was performed at a charge current rate of 10C until a charge end voltage of 2.0 V was reached. Subsequently, constant current discharge was performed at a discharge current rate of 10C until a discharge end voltage of 0 V was reached. This charge-discharge process was performed as one cycle, and 5 cycles of this process were performed. The initial discharge capacity was defined as the discharge capacity at the fifth cycle (the initial discharge capacity was normalized as a retention of 100%). A charge/discharge current rate of 1C was defined as the intensity of the current at which the cell capacitor can be discharged in 1 hour.

Next, charge was performed at a charge current rate of 10C in a 50°C thermostatic chamber until a charge end voltage of 2.0 V was reached. Subsequently, constant current discharge was performed at a discharge current rate of 10C until a discharge end voltage of 0 V was reached. After 500 cycles of the charge-discharge process was performed, the rate of change in the discharge capacity retention (the percentage of the discharge capacity at the 500th cycle to the initial discharge capacity) was calculated (the closer to 100% the better).
○: The rate of change is at least 95% (excellent).
○Δ: The rate of change is from 90% to less than 85% (absolutely acceptable).
Δ: The rate of change is from 85% to less than 80% (insufficient but workable level).
×: The rate of change is less than 85% (practically unacceptable or not workable).

### [Table 8]

**Table 8: Electric double-layer capacitors**

| | | | Adhesion | Counter electrode | Charge-discharge cycle characteristics |
|---|---|---|---|---|---|
| Example 28 | Electrode mixture ink | For positive electrode | ○ | Underlayer-less negative electrode | ○ |
| | Underlayer-bearing current collector | (1) | | | |
| Example 29 | Electrode mixture ink | For positive electrode | ○ | Underlayer-less negative electrode | ○ |
| | Underlayer-bearing current collector | (2) | | | |
| Example 30 | Electrode mixture ink | For positive electrode | ○ | Underlayer-less negative electrode | ○ |
| | Underlayer-bearing current collector | (3) | | | |
| Example 31 | Electrode mixture ink | For positive electrode | ○ | Underlayer-less negative electrode | ○ |
| | Underlayer-bearing current collector | (4) | | | |
| Example 32 | Electrode mixture ink | For positive electrode | ○Δ | Underlayer-less negative electrode | ○Δ |
| | Underlayer-bearing current collector | (5) | | | |
| Example 33 | Electrode mixture ink | For positive electrode | ○Δ | Underlayer-less negative electrode | ○ |
| | Underlayer-bearing current collector | (6) | | | |
| Example 34 | Electrode mixture ink | For positive electrode | ○Δ | Underlayer-less negative electrode | ○Δ |
| | Underlayer-bearing current collector | (7) | | | |
| Example 35 | Electrode mixture ink | For positive electrode | ○Δ | Underlayer-less negative electrode | ○Δ |
| | Underlayer-bearing current collector | (8) | | | |
| Example 36 | Electrode mixture ink | For positive electrode | ○Δ | Underlayer-less negative electrode | ○ |
| | Underlayer-bearing current collector | (9) | | | |
| Comparative Example 21 | Electrode mixture ink | For positive electrode | Δ | Underlayer-less negative electrode | Δ |
| | Underlayer-bearing current collector | Absent | | | |
| Comparative Example 22 | Electrode mixture ink | For positive electrode | Δ | Underlayer-less negative electrode | × |
| | Underlayer-bearing current collector | (19) | | | |
| Comparative Example 23 | Electrode mixture ink | For positive electrode | × | Underlayer-less negative electrode | × |
| | Underlayer-bearing current collector | (20) | | | |
| Comparative Example 24 | Electrode mixture ink | For positive electrode | × | Underlayer-less negative electrode | × |
| | Underlayer-bearing current collector | (21) | | | |
| Comparative Example 25 | Electrode mixture ink | For positive electrode | Δ | Underlayer-less negative electrode | Δ |
| | Underlayer-bearing current collector | (22) | | | |
| Comparative Example 26 | Electrode mixture ink | For positive electrode | Δ | Underlayer-less negative electrode | × |
| | Underlayer-bearing current collector | (23) | | | |
| Comparative Example 27 | Electrode mixture ink | For positive electrode | Δ | Underlayer-less negative electrode | Δ |
| | Underlayer-bearing current collector | (24) | | | |

### [Table 9]

**Table 9: Electric double-layer capacitors**

| | | | Adhesion | Counter electrode | Charge-discharge cycle characteristics |
|---|---|---|---|---|---|
| Example 37 | Electrode mixture ink | For negative electrode | ○Δ | Underlayer-less positive electrode | ○ |
| | Underlayer-bearing current collector | (10) | | | |
| Example 38 | Electrode mixture ink | For negative electrode | ○ | Underlayer-less positive electrode | ○ |
| | Underlayer-bearing current collector | (11) | | | |
| Example 39 | Electrode mixture ink | For negative electrode | ○ | Underlayer-less positive electrode | ○ |
| | Underlayer-bearing current collector | (12) | | | |
| Example 40 | Electrode mixture ink | For negative electrode | ○ | Underlayer-less positive electrode | ○ |
| | Underlayer-bearing current collector | (13) | | | |
| Example 41 | Electrode mixture ink | For negative electrode | ○Δ | Underlayer-less positive electrode | ○ |
| | Underlayer-bearing current collector | (14) | | | |
| Example 42 | Electrode mixture ink | For negative electrode | ○ | Underlayer-less positive electrode | ○ |
| | Underlayer-bearing current collector | (15) | | | |
| Example 43 | Electrode mixture ink | For negative electrode | ○Δ | Underlayer-less positive electrode | ○Δ |
| | Underlayer-bearing current collector | (16) | | | |
| Example 44 | Electrode mixture ink | For negative electrode | ○Δ | Underlayer-less positive electrode | ○Δ |
| | Underlayer-bearing current collector | (17) | | | |
| Example 45 | Electrode mixture ink | For negative electrode | ○Δ | Underlayer-less positive electrode | ○ |
| | Underlayer-bearing current collector | (18) | | | |
| Comparative Example 28 | Electrode mixture ink | For negative electrode | Δ | Underlayer-less positive electrode | Δ |
| | Underlayer-bearing current collector | Absent | | | |
| Comparative Example 29 | Electrode mixture ink | For negative electrode | Δ | Underlayer-less positive electrode | × |
| | Underlayer-bearing current collector | (25) | | | |
| Comparative Example 30 | Electrode mixture ink | For negative electrode | × | Underlayer-less positive electrode | × |
| | Underlayer-bearing current collector | (26) | | | |
| Comparative Example 31 | Electrode mixture ink | For negative electrode | × | Underlayer-less positive electrode | × |
| | Underlayer-bearing current collector | (27) | | | |
| Comparative Example 32 | Electrode mixture ink | For negative electrode | Δ | Underlayer-less positive electrode | Δ |
| | Underlayer-bearing current collector | (28) | | | |
| Comparative Example 33 | Electrode mixture ink | For negative electrode | Δ | Underlayer-less positive electrode | Δ |
| | Underlayer-bearing current collector | (29) | | | |
| Comparative Example 34 | Electrode mixture ink | For negative electrode | Δ | Underlayer-less positive electrode | Δ |
| | Underlayer-bearing current collector | (30) | | | |

### <Electrode mixture ink for lithium-ion capacitor positive electrode>

An electrode mixture ink for a positive electrode was prepared by mixing 85 parts of activated carbon (specific surface area 1,800 m²/g) as an active material, 5 parts of a conduction supporting agent (acetylene black (DENKA BLACK HS-100 manufactured by DENKI KAGAKU KOGYO KABUSHIKI KAISHA)), 8 parts of carboxymethyl cellulose (manufactured by Wako Pure Chemical Industries, Ltd.), and 3.3 parts (2 parts on a solid basis) of a binder (Polytetrafluoroethylene 30-J manufactured by Du Pont-Mitsui Fluorochemicals Company, Ltd. (a 60% aqueous dispersion)).

### <Electrode mixture ink for lithium-ion capacitor negative electrode>

An electrode mixture ink for a negative electrode was prepared by mixing 90 parts of graphite as a negative electrode active material, 5 parts of a conduction supporting agent (acetylene black (DENKA BLACK HS-100 manufactured by DENKI KAGAKU KOGYO KABUSHIKI KAISHA)), and 175 parts (3.5 parts on a solid basis) of an aqueous solution of 2% by weight hydroxyethyl cellulose (manufactured by Wako Pure Chemical Industries, Ltd.) in a mixer and mixing them with 26.3 parts of water and 3.75 parts (1.5 parts on a solid basis) of a binder (an aqueous dispersion of 40% styrene-butadiene latex (SBR)).

### <Underlayer-less positive electrode for lithium-ion capacitor (Comparative Example 35 and reference counter electrode)>

The electrode mixture ink for a lithium-ion capacitor positive electrode was applied with a doctor blade to a 20-µm-thick aluminum foil as a current collector. Subsequently, after the electrode mixture ink was dried by heating under reduced pressure, the product was rolled with a roll press, so that a 60-µm-thick positive electrode was obtained. The electrode of Comparative Example 35 was evaluated for adhesion by the above method. Table 10 shows the results of the evaluation.

### <Underlayer-bearing positive electrode for lithium-ion capacitor>

### [Example 46]

The electrode mixture ink for a lithium-ion capacitor positive electrode was applied with a doctor blade to the underlayer-bearing current collector (1) for an electrical storage device. Subsequently, after the electrode mixture ink was dried by heating under reduced pressure, the product was rolled with a roll press, so that a 60-µm-thick positive electrode was obtained. The resulting electrode was evaluated for adhesion by the above method. Table 10 shows the results of the evaluation.

### [Examples 47 to 54 and Comparative Examples 36 to 41]

Positive electrodes were obtained in the same way as in Example 46, except that the underlayer-bearing current collector shown in Table 10 for an electrical storage device was used instead. Table 10 also shows the results of the evaluation of the adhesion.

### <Underlayer-less negative electrode for lithium-ion capacitor (Comparative Example 42 and reference counter electrode)>

The electrode mixture ink for a lithium-ion capacitor negative electrode was applied with a doctor blade to a 20-µm-thick copper foil as a current collector. Subsequently, after the electrode mixture ink was dried by heating under reduced pressure, the product was rolled with a roll press, so that a 45-µm-thick negative electrode was obtained. The electrode of Comparative Example 42 was evaluated for adhesion by the above method. Table 11 shows the results of the evaluation.

### <Underlayer-bearing negative electrode for lithium-ion capacitor>

### [Example 55]

The electrode mixture ink for a lithium-ion capacitor negative electrode was applied with a doctor blade to the underlayer-bearing current collector (10) for an electrical storage device. Subsequently, after the electrode mixture ink was dried by heating under reduced pressure, the product was rolled with a roll press, so that a 45-µm-thick negative electrode was obtained. The resulting electrode was evaluated for adhesion by the above method. Table 11 shows the results of the evaluation.

### [Examples 56 to 63 and Comparative Examples 43 to 48]

Negative electrodes were obtained in the same way as in Example 55, except that the underlayer-bearing current collector shown in Table 11 for an electrical storage device was used instead. Table 11 also shows the results of the evaluation.

### <Lithium-ion capacitor>

A 16-mm-diameter piece was punched from each of the positive electrode shown in Table 10 and a negative electrode shown in Table 11, which was half-doped with lithium ions in advance. A lithium-ion capacitor was formed, including the resulting electrode pieces, a separator (porous polypropylene film) between the electrode pieces, and an electrolyte (a non-aqueous electrolyte obtained by dissolving 1 M of LiPF₆ in a mixed solvent of ethylene carbonate, dimethyl carbonate, and diethyl carbonate in a ratio of 1 : 1 : 1 (by volume)). In the half-doping with lithium ions, the negative electrode was doped with lithium ions in an amount corresponding to about half of the negative electrode capacity while the separator was placed between the negative electrode and a lithium metal in a beaker cell. The lithium-ion capacitor was formed in an argon gas filled glove box. After prepared, the lithium-ion capacitor was subjected to the prescribed electric characteristic evaluation. Tables 10 and 11 show the results of the evaluation.

### (Charge-discharge cycle characteristics)

The resulting lithium-ion capacitors were subjected to charge-discharge measurement using a charge-discharge system.

Charge was performed at a charge current rate of 10C until a charge end voltage of 4.0 V was reached. Subsequently, constant current discharge was performed at a discharge current rate of 10C until a discharge end voltage of 2.0 V was reached. This charge-discharge process was performed as one cycle, and 5 cycles of this process were performed. The initial discharge capacity was defined as the discharge capacity at the fifth cycle (the initial discharge capacity was normalized as a retention of 100%).

Next, charge was performed at a charge current rate of 10C in a 50°C thermostatic chamber until a charge end voltage of 4.0 V was reached. Subsequently, constant current discharge was performed at a discharge current rate of 10C until a discharge end voltage of 2.0 V was reached. After 500 cycles of the charge-discharge process was performed, the rate of change in the discharge capacity retention (the percentage of the discharge capacity at the 500th cycle to the initial discharge capacity) was calculated (the closer to 100% the better).
○: The rate of change is at least 95% (excellent).
○Δ: The rate of change is from 90% to less than 95% (absolutely acceptable).
Δ: The rate of change is from 85% to less than 90% (insufficient but workable level).
×: The rate of change is less than 85% (practically unacceptable or not workable).

### [Table 10]

**Table 10: Lithium-ion capacitors**

| | | | Adhesion | Counter electrode | Charge-discharge cycle characteristics |
|---|---|---|---|---|---|
| Example 46 | Electrode mixture ink | For positive" electrode | ○ | Underlayer-less negative electrode | ○ |
| | Underlayer-bearing current collector | (1) | | | |
| Example 47 | Electrode mixture ink | For positive electrode | ○ | Underlayer-less negative electrode | ○ |
| | Underlayer-bearing current collector | (2) | | | |
| Example 48 | Electrode mixture ink | For positive electrode | ○ | Underlayer-less negative electrode | ○ |
| | Underlayer-bearing current collector | (3) | | | |
| Example 49 | Electrode mixture ink | For positive electrode | ○ | Underlayer-less negative electrode | ○ |
| | Underlayer-bearing current collector | (4) | | | |
| Example 50 | Electrode mixture ink | For positive electrode | ○Δ | Underlayer-less negative electrode | ○Δ |
| | Underlayer-bearing current collector | (5) | | | |
| Example 51 | Electrode mixture ink | For positive electrode | ○ | Underlayer-less negative electrode | ○ |
| | Underlayer-bearing current collector | (6) | | | |
| Example 52 | Electrode mixture ink | For positive electrode | ○Δ | Underlayer-less negative electrode | ○ |
| | Underlayer-bearing current collector | (7) | | | |
| Example 53 | Electrode mixture ink | For positive electrode | ○Δ | Underlayer-less negative electrode | ○Δ |
| | Underlayer-bearing current collector | (8) | | | |
| Example 54 | Electrode mixture ink | For positive electrode | ○ | Underlayer-less negative electrode | ○ |
| | Underlayer-bearing current collector | (9) | | | |
| Comparative Example 35 | Electrode mixture ink | For positive electrode | Δ | Underlayer-less negative electrode | Δ |
| | Underlayer-bearing current collector | Absent | | | |
| Comparative Example 36 | Electrode mixture ink | For positive electrode | Δ | Underlayer-less negative electrode | × |
| | Underlayer-bearing current collector | (19) | | | |
| Comparative Example 37 | Electrode mixture ink | For positive electrode | × | Underlayer-less negative electrode | × |
| | Underlayer-bearing current collector | (20) | | | |
| Comparative Example 38 | Electrode mixture ink | For positive electrode | × | Underlayer-less negative electrode | × |
| | Underlayer-bearing current collector | (21) | | | |
| Comparative Example 39 | Electrode mixture ink | For positive electrode | × | Underlayer-less negative electrode | Δ |
| | Underlayer-bearing current collector | (22) | | | |
| Comparative Example 40 | Electrode mixture ink | For positive electrode | Δ | Underlayer-less negative electrode | × |
| | Underlayer-bearing current collector | (23) | | | |
| Comparative Example 41 | Electrode mixture ink | For positive electrode | Δ | Underlayer-less negative electrode | Δ |
| | Underlayer-bearing current collector | (24) | | | |

### [Table 11]

**Table 11: Lithium-ion capacitors**

| | | | Adhesion | Counter electrode | Charge-discharge cycle characteristics |
|---|---|---|---|---|---|
| Example 55 | Electrode mixture ink | For negative electrode | ○Δ | Underlayer-less positive electrode | ○ |
| | Underlayer-bearing current collector | (10) | | | |
| Example 56 | Electrode mixture ink | For negative electrode | ○ | Underlayer-less positive electrode | ○ |
| | Underlayer-bearing current collector | (11) | | | |
| Example 57 | Electrode mixture ink | For negative electrode | ○ | Underlayer-less positive electrode | ○ |
| | Underlayer-bearing current collector | (12) | | | |
| Example 58 | Electrode mixture ink | For negative electrode | ○ | Underlayer-less positive electrode | ○ |
| | Underlayer-bearing current collector | (13) | | | |
| Example 59 | Electrode mixture ink | For negative electrode | ○Δ | Underlayer-less positive electrode | ○Δ |
| | Underlayer-bearing current collector | (14) | | | |
| Example 60 | Electrode mixture ink | For negative electrode | ○Δ | Underlayer-less positive electrode | ○ |
| | Underlayer-bearing current collector | (15) | | | |
| Example 61 | Electrode mixture ink | For negative electrode | ○Δ | Underlayer-less positive electrode | ○Δ |
| | Underlayer-bearing current collector | (16) | | | |
| Example 62 | Electrode mixture ink | For negative electrode | ○Δ | Underlayer-less positive electrode | ○Δ |
| | Underlayer-bearing current collector | (17) | | | |
| Example 63 | Electrode mixture ink | For negative electrode | ○Δ | Underlayer-less positive electrode | ○Δ |
| | Underlayer-bearing current collector | (18) | | | |
| Comparative Example 42 | Electrode mixture ink | For negative electrode | Δ | Underlayer-less positive electrode | Δ |
| | Underlayer-bearing current collector | Absent | | | |
| Comparative Example 43 | Electrode mixture ink | For negative electrode | Δ | Underlayer-less positive electrode | × |
| | Underlayer-bearing current collector | (25) | | | |
| Comparative Example 44 | Electrode mixture ink | For negative electrode | × | Underlayer-less positive electrode | × |
| | Underlayer-bearing current collector | (26) | | | |
| Comparative Example 45 | Electrode mixture ink | For negative electrode | × | Underlayer-less positive electrode | Δ |
| | Underlayer-bearing current collector | (27) | | | |
| Comparative Example 46 | Electrode mixture ink | For negative electrode | Δ | Underlayer-less positive electrode | Δ |
| | Underlayer-bearing current collector | (28) | | | |
| Comparative Example 47 | Electrode mixture ink | For negative electrode | Δ | Underlayer-less positive electrode | × |
| | Underlayer-bearing current collector | (29) | | | |
| Comparative Example 48 | Electrode mixture ink | For negative electrode | Δ | Underlayer-less positive electrode | Δ |
| | Underlayer-bearing current collector | (30) | | | |

### <Conductive water-repellent layer-forming composition for air secondary cell positive electrode>

A conductive water-repellent layer-forming composition was prepared by mixing 75 parts of furnace black (Vulcan XC-72 manufactured by Cabot Corporation) as a conductive carbon material, 25 parts of a PTFE powder, and 20 parts of N-methylpyrrolidone in a mortar.

### <Electrode mixture ink composition for air secondary cell positive electrode>

A catalyst paste composition (4% by weight in solid concentration) was prepared by mixing and stirring 4 parts of a carbon-supported platinum catalyst (TEC10E50E manufactured by TANAKA KIKINZOKU KOGYO K.K., 46% in platinum content) as a catalytic material, 56 parts of propanol as a solvent, and 20 parts of ion-exchanged water in a disperser. An ink composition for an air cell positive electrode was prepared by adding 20 parts by weight of a 20% by weight PTFE dispersion (a dilution of PTFE 30-J (manufactured by Du Pont-Mitsui Fluorochemicals Company, Ltd., an aqueous dispersion of 60% polytetrafluoroethylene) with ion-exchanged water) as a binder to the catalyst paste composition and mixing and stirring them in a disperser.

### <Underlayer-less positive electrode for air secondary cell (Comparative Example 49)>

The conductive water-repellent layer-forming composition was thermocompression-bonded at a density of 2.7 mg/cm² to a 20-µm-thick aluminum punching metal, so that a conductive water-repellent layer was formed on the current collector.

Subsequently, the electrode mixture ink composition for an air secondary cell was applied to the formed conductive water-repellent layer on the current collector in such a way that the carbon-supported platinum catalyst was applied at a density of 0.46 mg/cm². The ink composition was dried by heating under vacuum, so that an air cell positive electrode was obtained.

### <Underlayer-bearing positive electrode for air secondary cell>

### [Examples 64 to 72 and Comparative Examples 50 to 55]

The conductive water-repellent layer-forming composition was thermocompression-bonded at a density of 2.7 mg/cm² to each of the underlayer-bearing current collectors (31) to (45) for an electrical storage device, so that a conductive water-repellent layer was formed on the current collector.

Subsequently, the electrode mixture ink composition for an air secondary cell was applied to the formed conductive water-repellent layer on the current collector in such a way that the carbon-supported platinum catalyst was applied at a density of 0.46 mg/cm². The ink composition was dried by heating under vacuum, so that each air cell positive electrode in Table 12 was obtained.

### (Evaluation of adhesion)

A cellophane tape was attached to and then detached from each air cell positive electrode shown in Table 12, which was prepared as described above. After the tape was detached, whether and how the coating layer was delaminated was visually evaluated. The evaluation criteria are shown below. Table 12 shows the results.
○: Nothing peels off (practically acceptable level).
○Δ: Only a small part peels off (insufficient but workable level).
Δ: About half peels off.
×: Almost the whole peels off.

### <Air secondary cell>

A separator (porous polypropylene film) impregnated with a non-aqueous electrolyte (1 M of LiPF₆ in ethylene carbonate/diethyl carbonate (1/1 in volume ratio)) and a solid electrolyte (LiCGC Plate manufactured by OHARA INC.) were placed on a Li foil and then fixed with an aluminum laminated film. In this process, an exposed surface of the solid electrolyte was formed by cutting a 16-mm-square part from the aluminum laminated film on the solid electrolyte side, so that an air cell anode was formed. Table 12 shows the components.

A nonwoven fabric impregnated with a 1 M LiCl aqueous solution as an aqueous electrolyte was placed on the solid electrolyte for the air cell anode. The positive electrode (cathode catalyst layer) prepared in each of Examples 64 to 72 and Comparative Examples 49 to 55 was then so placed that the surface of the catalyst layer was adjacent to the nonwoven fabric. The positive electrode was then fixed with an aluminum laminated film by thermocompression bonding, so that an air cell for evaluation was obtained.

### <Evaluation of cycle characteristics of air secondary cell>

The evaluation of the characteristics was performed as follows. Three-cycle warm-up operation was performed under the conditions of a cut-off voltage of 2.0 V to 4.8 V and a current density of 0.5 mA/cm². The capacity retention was then determined after 30 cycles of the charge-discharge test were performed under the same conditions. Table 12 shows the results of the evaluation.
○: The charge retention is at least 95% (excellent).
○Δ: The charge retention is from 90% to less than 95% (absolutely acceptable).
Δ: The charge retention is from 85% to less than 90% (insufficient but workable level).
×: The charge retention is less than 85% (practically unacceptable or not workable)

### [Table 12]

**Table 12: Air secondary cells**

| | Current collector | Adhesion | Charge-discharge cycle characteristics |
|---|---|---|---|
| Example 64 | Underlayer-bearing current collector | ○ | ○ |
| | (31) | | |
| Example 65 | Underlayer-bearing current collector | ○ | ○ |
| | (32) | | |
| Example 66 | Underlayer-bearing current collector | ○ | ○ |
| | (33) | | |
| Example 67 | Underlayer-bearing current collector | ○ | ○ |
| | (34) | | |
| Example 68 | Underlayer-bearing current collector | ○Δ | ○Δ |
| | (35) | | |
| Example 69 | Underlayer-bearing current collector | ○ | ○ |
| | (36) | | |
| Example 70 | Underlayer-bearing current collector | ○Δ | ○Δ |
| | (37) | | |
| Example 71 | Underlayer-bearing current collector | ○Δ | ○Δ |
| | (38) | | |
| Example 72 | Underlayer-bearing current collector | ○ | ○ |
| | (39) | | |
| Comparative Example 49 | Underlayer-bearing current collector | Δ | Δ |
| | Absent | | |
| Comparative Example 50 | Underlayer-bearing current collector | Δ | × |
| | (40) | | |
| Comparative Example 51 | Underlayer-bearing current collector | × | × |
| | (41) | | |
| Comparative Example 52 | Underlayer-bearing current collector | × | × |
| | (42) | | |
| Comparative Example 53 | Underlayer- bearing current collector | Δ | Δ |
| | (43) | | |
| Comparative Example 54 | Underlayer-bearing current collector | Δ | Δ |
| | (44) | | |
| Comparative Example 55 | Underlayer-bearing current collector | Δ | Δ |
| | (45) | | |

Tables 6 to 12 indicate that when the positive or negative electrode was formed by applying the electrode mixture ink to the underlayer made from the conductive composition according to the present invention, the resulting electrode had significantly improved adhesion between its components without any problems. It has been suggested that because the conductive carbon material is highly dispersed in the conductive composition according to the present invention, a good balance can be achieved among the physical properties of the resulting electrode, so that the resulting cell or capacitor can also have improved charge-discharge cycle characteristics. It has been found that particularly when the content of the water-dispersed resin fine particle binder falls within a specific range according to the present invention based on the total amount of the solids in the water-soluble resin binder and the water-dispersed resin fine particle binder, the resulting electrode can exhibit good properties such as good adhesion, good water resistance, and good conductivity and the resulting cell can have good characteristics. It has also been found that if the underlayer has low resistance to water as a solvent for an aqueous electrode mixture ink, the underlayer can be dissolved during the application of the electrode mixture ink to have an adverse effect on the cell performance. This suggests that an adequate degree of water resistance is important. It is also suggested that it is important to achieve a good balance among the physical properties of electrodes because cells are sometimes used in a harsh, high-temperature environment and therefore their durability is important.

Insufficient adhesion between electrode components will make it difficult for cells or capacitors to have long-term durability and thus cause degradation. In Comparative Example 1 where the dispersion of the conductive carbon material is insufficiently controlled, the adhesion between electrode components tends to be insufficient, and significant degradation is observed. This suggests that when the dispersion of the conductive carbon material is insufficiently controlled, a uniform conductive network cannot be formed in the process of forming the electrode, so that the resulting electrode can have a resistance distribution caused by partial aggregation, which may cause accelerated degradation due to current localization when the electrode is used in a cell or a capacitor.

As a result of a comparison between the results of evaluation of the examples and Comparative Examples 7, 14, 21, 28, 35, 42, and 49, Tables 6 to 12 also indicate that the performance of the lithium ion secondary cell, the electric double-layer capacitor, the lithium ion capacitor, and the air cell is better when the underlayer made from the conductive composition according to the present invention is used than when no underlayer is used. It is also apparent that in Comparative Examples 9, 16, 23, 30, 37, 44, and 51 where the conductive composition according to each comparative example is used to form the underlayer, the lithium ion secondary cell, the electric double-layer capacitor, the lithium ion capacitor, and the air cell have poor physical properties. This may be because the underlayer according to the comparative example could rather make insufficient the adhesion between the current collector and the composite layer, so that the resulting electrode could have a nonuniform state as compared with that in the case where no underlayer is used. The results would demonstrate that it is important to achieve a good balance among the physical properties of the underlayer-containing electrode.

### Industrial Applicability

Concerning industrial applicability, the use of the conductive composition of the present invention and the use of the underlayer made from the conductive composition to form at least one of positive and negative electrodes make it possible to obtain electrical storage devices, such as secondary cells or capacitors, with good properties. The conductive composition of the present invention and the underlayer made from the conductive composition may also be used to form primary cells such as air primary cells and fuel cells.

## Claims

1. A conductive composition including: (A) a conductive carbon material; (B) a water-soluble resin binder; (C) a water-dispersed resin fine particle binder; and (D) an aqueous liquid medium, wherein
the water-dispersed resin fine particle binder (C) is a (meth)acrylic emulsion obtained by emulsion polymerization of ethylenically unsaturated monomers including the following monomer group (C1) and the following monomer group (C2), in which the monomer group (C1) and (C2) are present in the following ratio,
(C1) at least one monomer selected from the group consisting of an ethylenically unsaturated monomer (c1) having a monoalkoxysilyl group or polyalkoxysilyl groups and a monomer (c2) having two or more ethylenically unsaturated groups per molecule, wherein the content of (C1) is 0.1 to 5% by weight,
(C2) an ethylenically unsaturated monomer (c3) other than the monomers (c1) and (c2), wherein the content of (c2) is 95 to 99.9% by weight,
wherein the total content of the monomers (c1) to (c3) is 100% by weight,
the content of the conductive carbon material (A) is from 20% by weight to 70% by weight based on the weight of the total solids in the conductive composition, and
the content of the water-soluble resin binder (B) is from 3% by weight to less than 40% by weight based on 100% by weight of the total solids in the water-soluble resin binder (B) and the water-dispersed resin fine particle binder (C).

2. The conductive composition according to Claim 1, which is for use in forming an underlayer for an electrode for use in an electrical storage device.

3. An underlayer-bearing current collector for use in an electrical storage device including: a current collector; and an underlayer made from the conductive composition according to Claim 1.

4. An electrode for use in an electrical storage device including: a current collector; an underlayer made from the conductive composition according to Claim 1; and a composite layer made from an electrode-forming composition including an electrode active material and a binder.

5. An electrical storage device including: a positive electrode; a negative electrode; and an electrolyte, wherein the positive electrode and/or the negative electrode is the electrode for use in the electrical storage device according to Claim 4.

## Patentansprüche

1. Eine leitfähige Zusammensetzung umfassend: (A) ein leitfähiges Kohlenstoffmaterial; (B) ein wasserlösliches Harzbindemittel; (C) ein wasserdispergiertes Harz-Feinpartikelbindemittel; und (D) ein wässriges flüssiges Medium, wobei
das wasserdispergierte Harz-Feinpartikelbindemittel (C) eine (Meth)acryl-Emulsion ist, die durch Emulsionspolymerisation von ethylenisch ungesättigten Monomeren einschließlich der folgenden Monomergruppe (C1) und der folgenden Monomergruppe (C2) erhalten wurde, wobei die Monomergruppe (C1) und (C2) im folgenden Verhältnis vorhanden sind,
(C1) mindestens ein Monomer ausgewählt aus der Gruppe bestehend aus einem ethylenisch ungesättigten Monomer (c1) mit einer Monoalkoxysilylgruppe oder Polyalkoxysilylgruppe und einem Monomer (c2) mit zwei oder mehr ethylenisch ungesättigten Gruppen pro Molekül, wobei der Gehalt an (C1) 0,1 bis 5 Gew.-% beträgt,
(C2) ein ethylenisch ungesättigtes Monomer (c3), das von den Monomeren (c1) und (c2) verschieden ist, wobei der Gehalt an (c2) 95 bis 99,9 Gew.-% beträgt,
wobei der Gesamtgehalt der Monomere (c1) bis (c3) 100 Gew.-% beträgt,
der Gehalt des leitfähigen Kohlenstoffmaterials (A) von 20 Gew.-% bis 70 Gew.-%, bezogen auf das Gewicht der gesamten Feststoffe in der leitfähigen Zusammensetzung, beträgt und
der Gehalt des wasserlöslichen Harzbindemittels (B) von 3 Gew.-% bis weniger als 40 Gew.-%, bezogen auf 100 Gew.-% der Gesamtfeststoffe im wasserlöslichen Harzbindemittel (B) und im wasserdispergierten Harzfeinpartikelbindemittel (C) beträgt.

2. Die leitfähige Zusammensetzung nach Anspruch 1 zur Verwendung beim Bilden einer Grundierungsschicht für eine Elektrode zur Verwendung in einer elektrischen Speichervorrichtung.

3. Ein Grundierungsschicht-tragender Stromabnehmer zur Verwendung in einer elektrischen Speichervorrichtung umfassend: einen Stromabnehmer; und eine Grundierungsschicht aus der leitenden Zusammensetzung nach Anspruch 1.

4. Eine Elektrode zur Verwendung in einer elektrischen Speichervorrichtung umfassend: einen Stromabnehmer; eine Grundierungsschicht aus der leitfähigen Zusammensetzung nach Anspruch 1; und eine Verbundschicht aus einer elektrodenbildenden Zusammensetzung, die ein elektrodenaktives Material und ein Bindemittel enthält.

5. Eine elektrische Speichervorrichtung umfassend: eine positive Elektrode; eine negative Elektrode; und einen Elektrolyten, wobei die positive Elektrode und/oder die negative Elektrode die Elektrode zur Verwendung in der elektrischen Speichervorrichtung nach Anspruch 4 ist.

## Revendications

1. Une composition conductrice comprenant : (A) un matériau en carbone conducteur ; (B) un liant en résine hydrosoluble ; (C) un liant à particules fines de résine dispersée dans l'eau ; et (D) un milieu liquide aqueux, dans laquelle
le liant (C) à particules fines de résine dispersées dans l'eau est une émulsion (méth)acrylique obtenue par polymérisation en émulsion de monomères éthyléniquement insaturés comprenant le groupe monomère suivant (C1) et le groupe monomère suivant (C2), le groupe monomère (C1) et (C2) étant présents selon le rapport qui suit,
(C1) au moins un monomère choisi dans le groupe constitué par un monomère éthyléniquement insaturé (c1) ayant un groupe monoalcoxysilyle ou des groupes polyalcoxysilyle et un monomère (c2) ayant deux ou plusieurs groupes éthyléniquement insaturés par molécule, la teneur en (C1) étant 0.1 à 5 % en poids,
(C2) un monomère éthyléniquement insaturé (c3) autre que les monomères (c1) et (c2), la teneur en (c2) étant de 95 à 99.9 % en poids,
la teneur totale en monomères (c1) à (c3) étant de 100 % en poids,
la teneur en matériau carbone conducteur (A) étant de 20 % en poids à 70 % en poids par rapport au poids des solides totaux dans la composition conductrice, et
la teneur en liant (B) en résine soluble dans l'eau allant de 3 % en poids à moins de 40 % en poids par rapport à 100 % en poids des solides totaux dans le liant (B) en résine soluble dans l'eau et dans le liant (C) à particules fines de résine dispersées dans l'eau.

2. La composition conductrice selon la revendication 1, qui est destinée à être utilisée pour former une sous-couche pour une électrode destinée à être utilisée dans un dispositif de stockage électrique.

3. Un collecteur de courant comportant une sous-couche destiné à être utilisé dans un dispositif de stockage électrique comprenant : un collecteur de courant ; et une sous-couche réalisée à partir de la composition conductrice selon la revendication 1.

4. Une électrode destinée à être utilisée dans un dispositif de stockage électrique comprenant : un collecteur de courant ; une sous-couche réalisée à partir de la composition conductrice selon la revendication 1 ; et une couche composite constituée d'une composition formant électrode comprenant un matériau actif d'électrode et un liant.

5. Un dispositif de stockage électrique comprenant : une électrode positive ; une électrode négative ; et un électrolyte, dans lequel l'électrode positive et/ou l'électrode négative est l'électrode destinée à être utilisée dans le dispositif de stockage électrique selon la revendication 4.
